(19) Europäisches Patentamt / European Patent Office / Office européen des brevets

(11) **EP 4 693 105 A1**

(12) **EUROPEAN PATENT APPLICATION**
published in accordance with Art. 153(4) EPC

(43) Date of publication:
**11.02.2026 Bulletin 2026/07**

(21) Application number: **24856617.6**

(22) Date of filing: **19.06.2024**

(51) International Patent Classification (IPC):
**G06N 3/048** (2023.01)     **G06N 3/0495** (2023.01)
**G06N 3/063** (2023.01)     **G06F 17/15** (2006.01)

(52) Cooperative Patent Classification (CPC):
**G06F 17/15; G06N 3/048; G06N 3/0495;
G06N 3/063**

(86) International application number:
**PCT/KR2024/008440**

(87) International publication number:
**WO 2025/042001 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.08.2023 KR 20230110762**

(71) Applicant: **Samsung Electronics Co., Ltd.
Suwon-si, Gyeonggi-do 16677 (KR)**

(72) Inventors:
• **LEE, Jonghun
  Suwon-si, Gyeonggi-do 16677 (KR)**
• **PARK, Chulsoo
  Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **PROCESSOR FOR PROCESSING SOFTMAX FUNCTION AND METHOD FOR OPERATING PROCESSOR**

(57) A method performed by at least one processor configured to implement an accelerator for processing a softmax function includes: obtaining input data comprising a plurality of quantized input values; generating input data distribution information indicating a plurality of frequencies corresponding to the plurality of quantized input values included in the input data; identifying a largest value from among the plurality of quantized input values as a first maximum value, based on the input data distribution information; determining an offset value based on a difference between the first maximum value and a second maximum value, wherein the second maximum value indicates a maximum quantization value that is representable by an input value of the input data; determining a plurality of index values by applying the offset value to each quantized input value of the plurality of quantized input values; and outputting a value of the softmax function corresponding to each of the plurality of quantized input values based on the plurality of index values.

FIG. 1

## Description

TECHNICAL FIELD

The disclosure relates to a processor and an operating method thereof. More specifically, the disclosure relates to a processor for processing artificial intelligence (AI) operations and an operating method of the processor.

BACKGROUND ART

Electronic devices, such as televisions (TVs), mobile terminals, or home appliances, may include a processor for processing artificial intelligence (AI). A processor for implementing AI may refer to a processor provided separately from a central processing unit (CPU) in order to increase the processing speed of AI operations including a neural network (NN). A processor for processing AI operations may include a graphics processing unit (GPU) or a neural processing unit (NPU).

AI operations processed by processors may include deep learning neural network operations. Deep learning neural networks may include convolution operations, product operations between matrices (or between a matrix and a vector), and operations on non-linear activation functions. Unlike servers with sufficient computing power, electronic devices may not have sufficient computing power for AI processing. Depending on the processing efficiency for each operation included in AI, there may be significant performance differences for on-device AI processes (e.g., inference using AI technology) of electronic devices.

Non-linear activation functions may include a sigmoid function, a hyperbolic tangent function, a rectified linear unit (ReLU) function, an exponential linear unit (ELU) function, a Gaussian error linear unit (GELU) function, and a softmax function.

Because a softmax function, which is one of the nonlinear activation functions, includes an exponential function operation and a division operation, the complexity for processing the softmax function is high. A processor for processing an artificial neural network (or an AI operation) may use a separate processor to process a softmax function. However, when a separate processor is used to process the softmax function, the time and resources are consumed due to data transmission. Therefore, there is a need for a method by which a processor processing an artificial neural network (or an AI operation) processes a softmax function.

DISCLOSURE

TECHNICAL SOLUTION

According to an embodiment of the disclosure, a method performed by at least one processor configured to implement an accelerator for processing a softmax function is provided. The method may include obtaining, using an input module included in the accelerator, input data comprising a plurality of quantized input values. The method may include generating, using a distribution information processing module included in the accelerator, input data distribution information indicating a plurality of frequencies corresponding to the plurality of quantized input values included in the input data. The method may include identifying, using the distribution information processing module, a largest value from among the plurality of quantized input values as a first maximum value, based on the input data distribution information. The method may include determining, using the distribution information processing module, an offset value based on a difference between the first maximum value and a second maximum value, wherein the second maximum value indicates a maximum quantization value that is representable by an input value of the input data. The method may include determining, using a look-up table (LUT) module included in the accelerator, a plurality of index values by applying the offset value to each quantized input value of the plurality of quantized input values. The method may include outputting, using the LUT module, a value of the softmax function corresponding to each of the plurality of quantized input values based on the plurality of index values.

According to an embodiment of the disclosure, a processor for processing a softmax function is provided. The processor may include at least one processor configured to implement an accelerator comprising an input module, a distribution information processing module, and a look-up table (LUT) module. The input module may be configured to obtain input data including a plurality of quantized input values. The distribution information processing module may be configured to generate input data distribution information indicating a plurality of frequencies corresponding to the plurality of quantized input values included in the input data. The distribution information processing module may be configured to identify a largest value from among the plurality of quantized input values as a first maximum value, based on the input data distribution information. The distribution information processing module may be configured to determine an offset value based on a difference between the first maximum value and a second maximum value. The second maximum value may indicate a maximum quantization value that is representable by an input value of the input data. The LUT module may be configured to determine a plurality of index values by applying the offset value to each quantized input value of the plurality of quantized input values. The LUT module may be configured to output a value of the softmax function corresponding to each of the plurality of quantized input values based on the plurality of index values.

According to an embodiment, an electronic device is provided. The electronic device may include a first processor configured to process a softmax function, a second processor, and a memory. The second processor may be configured to control the first processor to process an artificial intelligence (AI) operation including the softmax function by executing instructions included in the memory. The first processor may be configured to implement an accelerator. The accelerator may comprise an input module, a distribution information processing module, and a look-up table (LUT) module. The input module may be configured to obtain input data comprising a plurality of quantized input values. The distribution information processing module may be configured to generate input data distribution information indicating a plurality of frequencies corresponding to the plurality of quantized input values included in the input data. The distribution information processing module may be configured to identify a largest value from among the plurality of quantized input values as a first maximum value, based on the input data distribution information. The distribution information processing module may be configured to determine an offset value based on a difference between the first maximum value and a second maximum value. The second maximum value may indicate a maximum quantization value that is representable by an input value of the input data. The LUT module may be configured to determine a plurality of index values by applying the offset value to each quantized input value of the plurality of quantized input values. The LUT module may be configured to output a value of the softmax function corresponding to each of the plurality of quantized input values based on the plurality of index values.

DESCRIPTION OF DRAWINGS

FIG. 1 is a block diagram illustrating a processor for processing an artificial neural network (or an artificial intelligence (AI) operation), according to an embodiment of the disclosure.

FIG. 2 is a block diagram illustrating a processor for processing an artificial neural network (or an AI operation), according to an embodiment of the disclosure.

FIG. 3 is a flowchart of an operating method of a processor including an accelerator for processing a softmax function, according to an embodiment of the disclosure.

FIG. 4A is a diagram illustrating quantization of an input value, according to an embodiment of the disclosure.

FIG. 4B is a diagram illustrating quantization of an exponential function value, according to an embodiment of the disclosure.

FIG. 4C is a diagram illustrating quantization of an input value and an exponential function value, according to an embodiment of the disclosure.

FIG. 5 is a diagram illustrating an operation of modifying input data distribution information, according to an embodiment of the disclosure.

FIG. 6 is a diagram illustrating an operation of calculating a denominator value of a softmax function, according to an embodiment of the disclosure.

FIG. 7 is a flowchart of an operation of a distribution information processing module and an input module of an accelerator, according to an embodiment of the disclosure.

FIG. 8A is a flowchart of an operation of a parameter module of an accelerator, according to an embodiment of the disclosure.

FIG. 8B is a flowchart of an operation of a parameter module of an accelerator, according to an embodiment of the disclosure.

FIG. 9 is a flowchart of an operation of a post-processing module of an accelerator, according to an embodiment of the disclosure.

FIG. 10 is a block diagram illustrating an operation of an accelerator, according to an embodiment of the disclosure.

FIG. 11 is a flowchart of an operating method of a processor according to input data, according to an embodiment of the disclosure.

FIG. 12A is a diagram illustrating a process in which a processor performs an AI operation, according to an embodiment of the disclosure.

FIG. 12B is a diagram illustrating a process in which a processor performs an AI operation, according to an embodiment of the disclosure.

FIG. 13 is a block diagram illustrating an electronic device according to an embodiment of the disclosure.

FIG. 14 is a diagram illustrating an electronic device including a processor, according to an embodiment of the disclosure.

MODE FOR INVENTION

Throughout the disclosure, the expression "at least one of a, b or c" may indicate only a, only b, only c, both a and b, both a and c, both b and c, all of a, b, and c, or variations thereof.

As for the terms as used in the disclosure, common terms that are currently widely used are selected as much as possible while taking into account the functions in the disclosure. However, the terms may vary depending on the intention of those of ordinary skill in the art, precedents, the emergence of new technology, and the like. Also, in specific cases, there are also terms arbitrarily selected by the applicant. In this case, the meaning of the terms will be understood through the corresponding explanation parts. Therefore, the terms as used herein should be defined based on the meaning of the terms and the description throughout the disclosure rather than simply the names of the terms.

The singular forms as used herein are intended to include the plural forms as well unless the context clearly indicates otherwise. It will be understood that although the terms "first," "second," etc. may be used to describe various elements, these elements should not be limited by these terms. These terms are only used to distinguish one element from another.

Throughout the disclosure, the expression "a portion includes a certain element" may mean that the portion further includes other elements rather than excludes other elements unless otherwise stated. In the disclosure, the term such as "unit" and "module" may refer to a unit that processes at least one function or operation.

The expression "configured to" as used herein may be used interchangeably with, for example, "suitable for," "having the capacity to," "designed to," "adapted to," "made to," or "capable of" depending on a situation. The term "configured to" may not necessarily mean only "specifically designed to" in hardware. In some situations, the expression "a system configured to" may mean that the system is "capable of ..." with other devices or components. The expression "a module performs ..." as used herein may be used interchangeably with "a module is configured to perform ..." depending on a situation.

When one element is referred to as being "connected" or "coupled" to another element, this may mean that the one element may be directly connected or coupled to the other element, but it will be understood that the elements may be connected or coupled to each other via an intervening element therebetween unless otherwise stated.

The expression "a module transmits or transfers data" as used herein may mean that the module provides data to another module. A module may be connected to another module by wire or wirelessly. A module may provide data directly to another module, or may provide data to another module through still another module.

In describing the disclosure, descriptions of technical contents that are well known in the technical field to which the disclosure belongs and are not directly related to the disclosure may be omitted. By omitting some description, the disclosure may be described more clearly without obscuring the gist of the disclosure. In order to clearly explain the disclosure, parts irrelevant to the description are omitted in the drawings, and similar reference numerals are assigned to similar parts throughout the disclosure. Also, reference numerals used in the drawings are only for describing the drawings, and different reference numerals used in different drawings do not indicate different elements. The size of each element does not entirely reflect the actual size. The same reference numerals are assigned to the same or corresponding elements in the drawings.

Advantages and features of the disclosure, and methods of achieving them will be clarified with reference to embodiments described below in detail with reference to the accompanying drawings. However, the disclosure is not limited to the following embodiments and may be embodied in different various forms. Embodiments presented below are provided so that the disclosure will be thorough and complete and will fully convey the concept of the embodiments to those of ordinary skill in the art. An embodiment of the disclosure may be defined by the claims.

It will be understood that the respective blocks of the flowcharts and combinations of the flowcharts may be performed by computer program instructions. Computer program instructions may be mounted on processors of general-purpose computers, special-purpose computers, or other programmable data processing apparatuses, and the instructions to be executed through the processors of the computers or other programmable data processing apparatuses generate modules for performing the functions described in the flowchart block(s). Because computer program instructions may also be stored in a computer-executable or computer-readable memory that may direct the computer or other programmable data processing apparatus in order to implement functions in a particular manner, the instructions stored in the computer-executable or computer-readable memory are also capable of producing an article of manufacture containing instruction modules for performing the functions described in the flowchart block(s). Computer program instructions may also be mounted on computers or other programmable data processing apparatuses.

In the disclosure, each block in the flowcharts may represent part of a module, segment, or code that includes one or more executable instructions for executing a specified logical function(s). In an embodiment of the disclosure, the functions mentioned in blocks may occur out of order. For example, two blocks illustrated in succession may in fact be executed substantially concurrently, or the blocks may sometimes be executed in a reverse order, depending on the functions involved therein.

As is traditional in the field, embodiments may be described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

The term "...er/or" as used herein may refer to a hardware element, such as a field programmable gate array (FPGA) or an application specific integrated circuit (ASIC), and the "-er/or" may perform certain functions. The term "-er/or" may not be limited to hardware. The term "-er/or" may be configured in an addressable storage medium or may be configured to reproduce one or more processors. In an embodiment of the disclosure, the "...er/or" may include elements, such as software elements, object-oriented software elements, class elements, and task elements, processes, functions, attributes, procedures, subroutines, segments of program code, drivers, firmware, microcodes, circuits, data, databases, data structures, tables, arrays, and variables. Functions provided through specific elements or specific "...er/or" may be combined to reduce the number thereof or may be separated into additional elements. In addition, in an embodiment of the disclosure, "...er/or" may include one or more processors.

Hereinafter, an embodiment of the disclosure will be described in detail with reference to the accompanying drawings, so that those of ordinary skill in the art may easily carry out the disclosure. However, the disclosure may be implemented in various different forms and is not limited to the embodiments described herein. Hereinafter, the disclosure is described in detail with reference to the accompanying drawings.

In the disclosure, an input module may include a module configured to obtain data for an accelerator. In the disclosure, the input module may be used interchangeably with terms such as an input queue or a data obtaining module. Alternatively, the input module may include an input buffer, or may be used interchangeably with an input buffer.

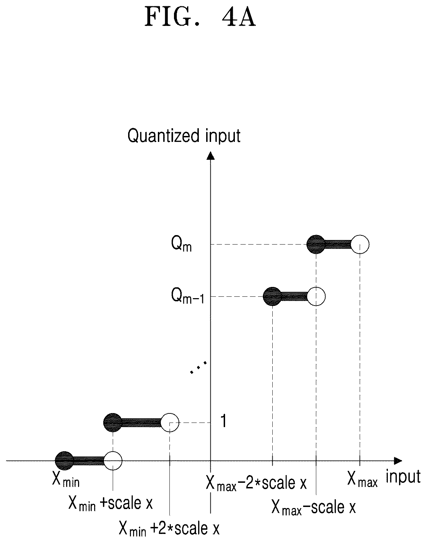

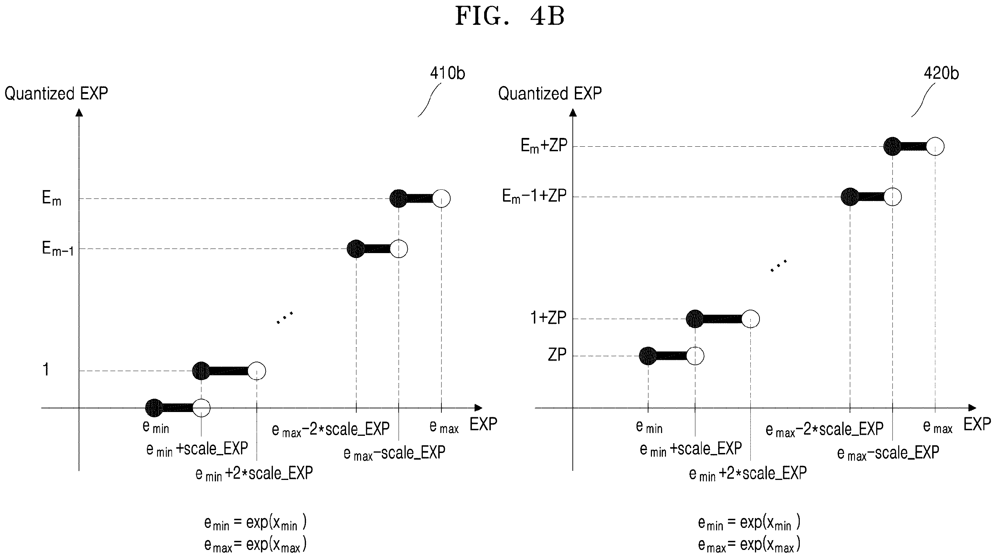

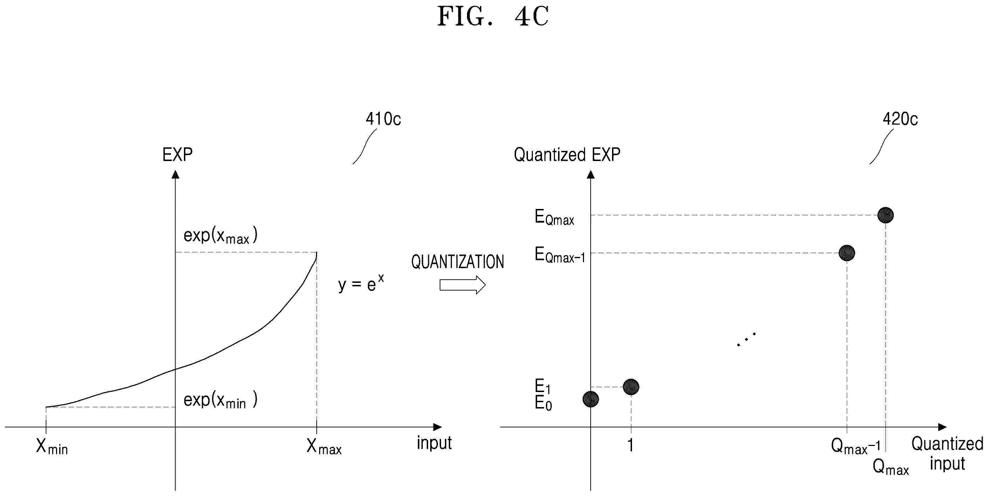

In the disclosure, quantization may include converting continuously representable data into discontinuous or discrete data. Quantization may refer to converting a value included in a certain range into a reference value. For example, quantization may refer to representing a value great than or equal to $x_0$ and less than $x_1$ as 0 and representing a value greater than or equal to $x_1$ and less than $x_2$ as 1. In the disclosure, quantization may be used interchangeably with terms such as "sampling," "discretization," or "integerization." Quantized data according to an embodiment of the disclosure may be understood with reference to FIGS. 4A, 4B, and 4C.

In the disclosure, a maximum quantization value may refer to the largest value (or greatest value) that is representable by quantized data. For example, when data is quantized to an integer value between "0" and "255", a maximum quantization value may be "255". According to an embodiment of the disclosure, a maximum quantization value of output data of an accelerator may be equal to a maximum quantization value of input data of the accelerator, but the disclosure is not limited thereto. In the disclosure, the maximum quantization value may be used interchangeably with terms such as a "quantization upper limit," a "maximum representable value," or a "quantization range." The maximum quantization value according to an embodiment of the disclosure may be understood with reference to FIGS. 4A, 4B, and 4C.

In the disclosure, frequencies of input values may include the number of times the input values are included in the input data. For example, when the input data is [0, 2, 2, 1, 0], the input values are "0", "2", "2", "1", and "0". The frequency of the input value "0" may be 2, frequency of the input value "1" may be 1, and frequency of the input value "2" may be 2. The frequencies of quantization values not included in the input data may be 0. In the above example, the frequency of the input value "3" may be 0. In an embodiment of the disclosure, a distribution information processing module of an accelerator may generate input data distribution information including frequencies of input values of input data. The input data distribution information may refer to information associated with the distribution of the input values included in the input data. For example, the input data distribution information may refer to information indicating the frequencies of the input values (e.g., the number of times the input values are included in the input data). In the disclosure, the input data distribution information may be used interchangeably with terms such as "input data frequency information" or "input data statistical information." The frequencies of the input values may be determined for all quantization values. For example, when the maximum quantization value is "255", the frequency of the input value may be determined for each integer between "0" and "255". For example, the input data distribution information may include or indicate the number of times each integer between "0" and "255" is included in the input data.

In the disclosure, the distribution information processing module may include a module configured to process the input data distribution information. For example, the distribution information processing module may generate the input data distribution information. In the disclosure, the distribution information processing module may be used interchangeably with terms such as a "distribution analysis module" or a "data processing module".

In the disclosure, a look-up table (LUT) module may include a module configured to output a value of a softmax function. The LUT module may output a value of a softmax function corresponding to input data. In the disclosure, the LUT module may be used interchangeably with terms such as a "reference table module", a "data dictionary module", or a "data mapping module".

In the disclosure, an index value may refer to a value representing one among a plurality of values stored in the LUT module. In an embodiment of the disclosure, the LUT module may store information including a plurality of index values and a value corresponding to each index value. The LUT module may obtain an index value and provide a stored value corresponding to the index value. In the disclosure, the index value may be used interchangeably with terms such as an "index," a "key," a "key value," or a "look-up key."

In the disclosure, exponential function information may include information about quantized exponential function values. The exponential function information may include an exponential function value associated with a value that is representable by quantized input data. For example, when input data is quantized to one of integer values between "0" and "255", the exponential function information may include an integer value between "0" and "255" and an exponential function value corresponding to each integer value. In an embodiment of the disclosure, the exponential function value may be a quantized value. According to an embodiment of the disclosure, the exponential function information may include data in which a plurality of values that are representable by quantized input data and exponential function values corresponding thereto are represented in a table format. In the disclosure, the exponential function information may be used interchangeably with terms such as an "exponential function table," "exponential function LUT information," "exponential function data," or "exponential value information."

In the disclosure, shifting may refer to an operation of modifying input data distribution information. According to an embodiment of the disclosure, shifting input data distribution information by an offset value may mean that the frequency of the input value of the input data distribution information is shifted by the offset value. When the input data distribution information is shifted by the offset value, the offset value may be added to each of the input values included in the input data distribution information. For example, when the frequency of the input value "x" is "f1" and the input data is shifted by the offset value "a," the frequency of the input value "x+a" may be "f1." For example, when the frequencies of the input values "0", "1", "2", and "3" are 5, 1, 3, and 0, respectively, shifting by 1, which may be performed by the accelerator, may mean modifying the input data distribution information so that the frequencies of the input values "0", "1", "2", and "3" are 0, 5, 1, and 3, respectively. The modified input data distribution information may refer to the result of shifting the input data distribution information by the offset value.

In the disclosure, a shift operation may refer to an arithmetic shift. The shift operation may include a left shift operation or a right shift operation. The left shift operation may be represented by "<<", and the right shift operation may be represented by ">>". The left shift operation may be understood as left-shifting a binary bit of an operation target value. Left-shifting by N bits may be understood as multiplying the operation target value by $2^N$ (2 to the N$^{th}$ power). For example, $3<<2$ may mean 12. In the disclosure, performing a left shift operation by N may mean multiplying a target value by $2^N$ (2 to the N$^{th}$ power). The right shift operation may be understood as right-shifting a binary bit of an operation target value. Right-shifting by N bits may be understood as dividing the operation target value by $2^N$ (2 to the N$^{th}$ power). In the disclosure, performing a right shift operation by N may mean dividing a target value by $2^N$ (2 to the N$^{th}$ power). For example, $12>>2$ may mean 3.

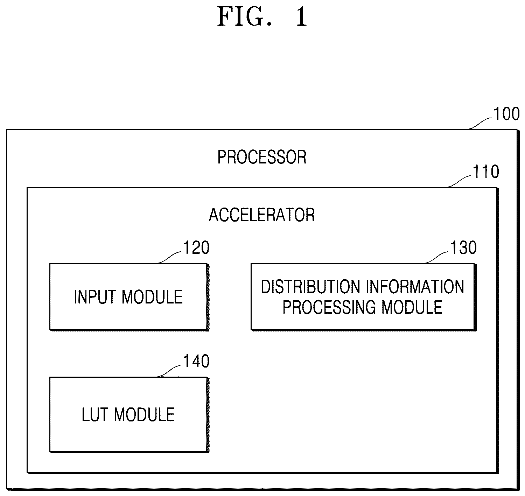

FIG. 1 is a block diagram illustrating a processor 100 for processing an artificial neural network (or an artificial intelligence (AI) operation), according to an embodiment of the disclosure.

Referring to FIG. 1, the processor 100 may include an accelerator 110. The accelerator 110 may include an input module 120, a distribution information processing module 130, and a LUT module 140. The input module 120, the distribution information processing module 130, and the LUT module 140 may be implemented in the accelerator 110 in the form of hardware (HW).

In an embodiment of the disclosure, the processor 100 may receive an activation function. The activation function may be a non-linear function that outputs a non-linear value for an input. The activation function may include a softmax function. The softmax function may be expressed according to Equation 1.

[Equation 1]

$$y_i = \frac{e^{x_i}}{\sum e^{x_j}}$$

The value of the softmax function for the i$^{th}$ input data is determined based on the sum of the exponents of all input data and the exponent power of the i$^{th}$ input data.

The softmax function may derive the same result value even when a reference value is added to or subtracted from the input data. For example, the value of the softmax function for a case where the input data is [x1, x2, x3] is equal to the value of the softmax function for a case where the input data is [x1+a, x2+a, x3+a]. The processor 100 may calculate the value of the softmax function by adjusting the input data. For example, the processor 100 may calculate the value of the softmax function for a case where the input data is [4000, 3999, 3998] by changing the input data to [2, 1, 0]. Similarly, the processor 100 may calculate the value of the softmax function by changing the input data [2, 1, 0] to [4000, 3999, 3998]. Accordingly, the accelerator 110 according to an embodiment of the disclosure may determine the value of the softmax function by adjusting the input data. The accelerator 110 may generate modified input data distribution information and determine the value of the softmax function using the modified input data distribution information. According to an embodiment of the disclosure, examples of an operation in which the accelerator 110 determines the value of the softmax function using the modified input data distribution information are described in detail with reference to FIGS. 1 to 11.

In an embodiment of the disclosure, the processor 100 may process an AI operation such as the softmax function. The processor 100 may process the softmax function to calculate at least one result value associated with the operation of the electronic device including the processor 100. The processor 100 may include the accelerator 110.

In an embodiment of the disclosure, the accelerator 110 may be an auxiliary computing device included in or otherwise associated with an electronic device that processes or is configured to process an AI operation. For example, the accelerator 110 may be an auxiliary computing device used in the processor 100 that performs an operation using machine learning or deep learning. The accelerator 110 may increase the efficiency of operations performed by the processor 100. For example, the accelerator 110 may reduce the time required for operations repeated in order to process the function input from the processor 100. In an embodiment of the disclosure, the processor 100 may process the softmax function using the accelerator 110.

The input module 120 may obtain input data including a plurality of quantized input values. The input module 120 may include an input buffer that stores or is configured to store input data. For example, the input buffer may sequentially obtain input values of input data from at least one of a memory or another accelerator. In an embodiment of the disclosure, the input module 120 may obtain input data from a memory included in the accelerator 110 or another accelerator included in the processor 100.

In an embodiment of the disclosure, the input data may be represented in the form of a vector, a matrix, or a tensor. For example, the input data may be vector-type data having a size of 1x1xD. Alternatively, for example, the input data may be matrix-type data having a size of 1xWxH, tensor-type data having a size of CxWxH, or a tensor including four dimensions or more.

In an embodiment of the disclosure, an input value included in the input data may be a quantized value. The input value may be an integer within a certain range. The input value may be an integer between "0" and the maximum quantization value. For example, when the maximum quantization value is "255", the input value may be one of the integers between "0" and "255". Examples of quantized data according to an embodiment of the disclosure are described in detail with reference to FIGS. 4A, 4B, and 4C.

The input module 120 may transmit the input data to the distribution information processing module 130. In an embodiment of the disclosure, the input module 120 may sequentially transmit the input values of the input data to the distribution information processing module 130. The input module 120 may transmit the input data to the LUT module 140. The LUT module 140 may use the input data obtained from the input module 120 in order to output the value of the softmax function.

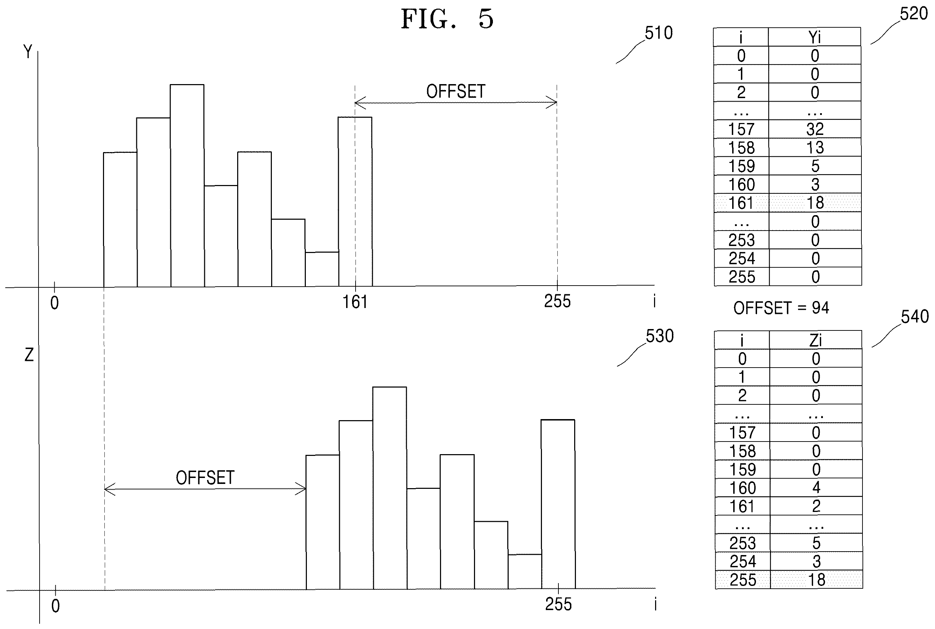

The distribution information processing module 130 may generate input data distribution information indicating the frequencies of a plurality of quantized input values included in the input data. For example, the distribution information processing module 130 may generate information including the number of times the input value appears in the input data. For example, when the input values of the input data are "0", "3", "2", "2", and "0", the input data distribution information may include information indicating that the frequency of "0" is 2, the frequency of "1" is 0, the frequency of "2" is 2, and the frequency of "3" is 1. An example of input data distribution information according to an embodiment of the disclosure is described in detail with reference to FIG. 5.

The distribution information processing module 130 may identify the largest value among the quantized input values as a first maximum value, based on the input data distribution information. The distribution information processing module 130 may identify, as the first maximum value, the maximum value among quantization values whose frequencies are not 0 among the input data distribution information. For example, when the input values of the input data are "0", "3", "2", "2", and "0", the quantization values whose frequencies are not 0 among the input data distribution information are "0", "2", and "3". The distribution information processing module 130 may identify "3", the largest value among "0", "2", and "3", as the first maximum value.

The distribution information processing module 130 may determine, as an offset value, a difference between the first maximum value and a second maximum value indicating the maximum quantization value representable by the input value of the input data. For example, when the maximum quantization value of the input data is "7" and the input values are "0", "3", "2", "2', and "0", the first maximum value is "3" and the second maximum value is "7". Accordingly, the distribution information processing module 130 may determine the offset value to be "4" (because 7-3=4). The distribution information processing module 130 may transmit the offset value to the LUT module 140.

The LUT module 140 may determine index values by applying an offset value to each of the quantized input values. For example, when the input values of the input data are "0", "3", "2", "2", and "0" and the offset value is 4, the LUT module 140 may determine the corresponding index values to be "4", "7", "6", "6", and "4". The LUT module 140 may identify the quantized input values based on the input data obtained from the input module 120.

The LUT module 140 may output a value corresponding to the index value as the value of the softmax function for the input value. The LUT module 140 may store a plurality of values, and may output a value corresponding to an index value from among the stored values. In an embodiment of the disclosure, the values stored in the LUT module 140 may be the value of the softmax function (or an approximate value of the softmax function) corresponding to each input value. The LUT module 140 may store a LUT including the values of the softmax function corresponding to a plurality of index values.

As shown in Equation 1, the value of the softmax function includes an exponential function operation and a division operation. The accelerator 110 may output the value of the softmax function without performing at least a portion of the exponential function operation and the division operation using the input module 120, the distribution information processing module 130, and the LUT module 140.

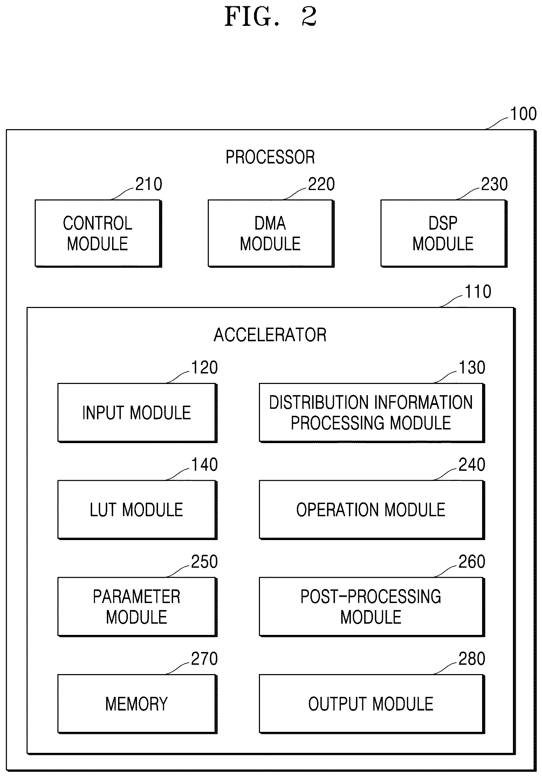

FIG. 2 is a block diagram illustrating the processor 100 for processing an AI operation, according to an embodiment of the disclosure.

Referring to FIG. 2, the processor 100 may further include a control module 210, a direct memory access (DMA) module 220, and a digital signal processing (DSP) module 230.

The control module 210 may be configured to control operations of other elements included in the processor 100. In an embodiment of the disclosure, the control module 210 may control the operation of at least one of the accelerator 110 or the DSP module 230. The control module 210 may control the accelerator 110 to output output data including the value of the softmax function, based on the input data. For example, the control module 210 may control the accelerator 110 to perform at least one of a convolution operation or a softmax operation. According to an embodiment of the disclosure, the control module 210 may control the accelerator 110 based on a control command obtained from a central processing unit (CPU) of the electronic device including the processor 100. For example, the control module 210 may control at least one of the accelerator 110 or the DSP module 230 to perform at least a portion of a neural network operation according to a neural network operation execution command for the processor 100 of the CPU.

The DMA module 220 may be configured to communicate with other elements of the electronic device including processor 100. The DMA module 220 may communicate with other elements without passing through the CPU of the electronic device. For example, the processor 100 may communicate with a graphic processing unit (GPU) or a neural network processing unit.

The DSP module 230 may be configured to process digital signals. Except for product and sum operations, the control module 210 may perform complex operations through the DSP module 230. However, in the process of processing AI operations, data exchange between the accelerator 110 and the DSP module 230 may cause an increase in processing time. Accordingly, when the processor 100 performs operations by utilizing the accelerator 110 as much as possible, the operation execution time may be reduced.

The accelerator 110 may additionally include an operation module 240, a parameter module 250, a post-processing module 260, a memory 270, and an output module 280, in addition to the input module 120, the distribution information processing module 130, and the LUT module 140 of FIG. 1.

In an embodiment of the disclosure, the distribution information processing module 130 may transmit, to the operation module 240, modified input data distribution information generated by shifting the input data distribution information by an offset value.

The operation module 240 may be configured to perform calculations used by the accelerator 110. In an embodiment of the disclosure, the operation module 240 may be configured to perform product and sum operations. For example, the operation module 240 may be configured to perform a multiply-accumulate (MAC) operation. Because a convolution operation and an inter-matrix product, which account for a large portion of an AI operation, are operations represented by product and sum, the accelerator 110 may accelerate an AI operation using the operation module 240.

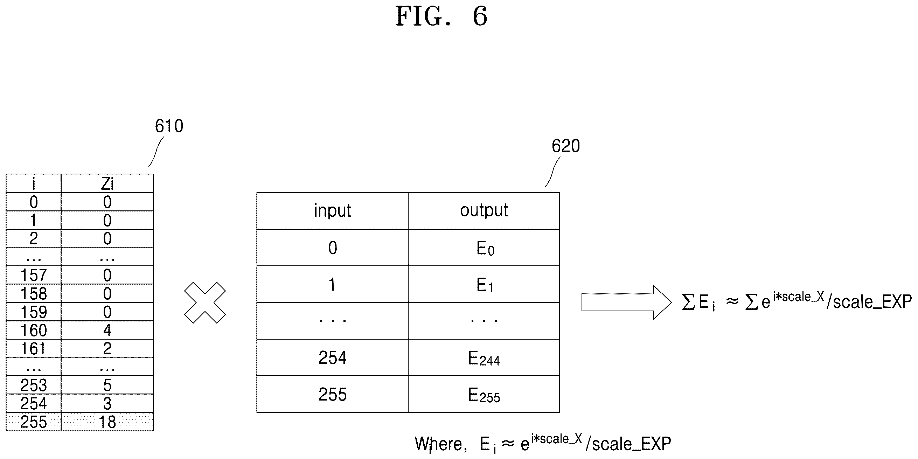

In an embodiment of the disclosure, the operation module 240 may calculate a value corresponding to a denominator of the softmax function using the modified input data distribution information and the exponential function information. In an embodiment of the disclosure, the value corresponding to the denominator of the softmax function may be referred to denominator value of the softmax function. The exponential function information may include information about quantized exponential function values. The exponential function information according to an embodiment of the disclosure may be obtained from the memory 270. The value corresponding to the denominator of the softmax function may be calculated by performing product and sum operations between the modified input data distribution information and the exponential function information. In an embodiment of the disclosure, the value corresponding to the denominator of the soft max function may be referred to as a denominator value of the softmax function, or may also be referred to as the sum of exponential functions. An example of an operation in which the operation module 240 according to an embodiment of the disclosure calculates the value corresponding to the denominator of the softmax function is described in detail with reference to FIG. 6. According to an embodiment of the disclosure, the operation module 240 may transmit, to the parameter module 250, the value corresponding to the denominator of the softmax function.

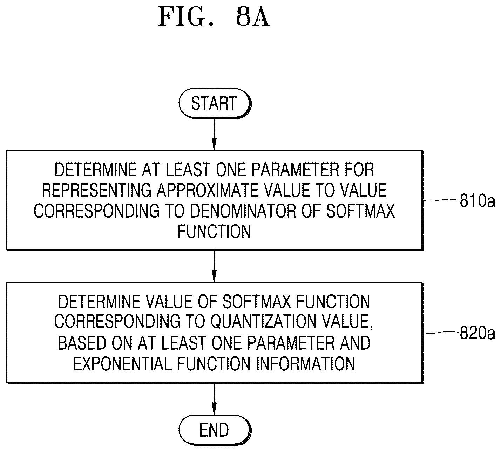

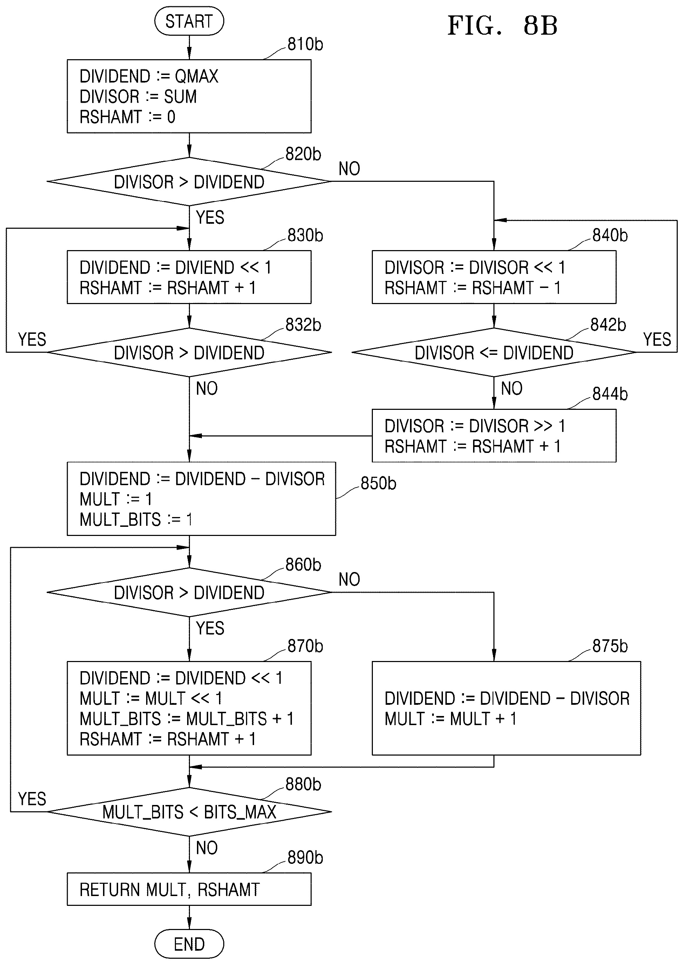

The parameter module 250 may be configured to determine a parameter for calculating the value of the softmax function. In an embodiment of the disclosure, the parameter module 250 may determine at least one parameter for representing an approximate value to the value corresponding to the denominator of the softmax function. In an embodiment of the disclosure, the at least one parameter may include a first parameter and a second parameter, and a value obtained by dividing the second maximum value (e.g., the maximum quantization value of the input data) by the denominator value of the softmax function may be determined based on a value obtained by performing a right shift operation on the first parameter by the second parameter. The parameter module 250 according to an embodiment of the disclosure may determine the first parameter and the second parameter for representing the value of the quantized softmax function. An example of an operation of determining the parameter, according to an embodiment of the disclosure, is described in detail with reference to FIGS. 8A and 8B. The parameter module 250 according to an embodiment of the disclosure may transmit the at least one parameter to the post-processing module 260.

The post-processing module 260 may be configured to determine the value of the softmax function. In an embodiment of the disclosure, the post-processing module 260 may determine the value of the softmax function based on the at least one parameter and the exponential function information. For example, the post-processing module 260 may determine the value of the softmax function by applying the at least one parameter to the exponential function value of the exponential function information.

In an embodiment of the disclosure, the post-processing module 260 may store the generated value of the softmax function in the LUT module 140. A LUT included or stored in the LUT module 140 may include values of the softmax function corresponding to a plurality of indices. The value of the softmax function of the LUT may be dynamically determined according to the input data. Because the accelerator 110 may use some approximate values in the process of calculating the value of the softmax function, the value of the softmax function may be dynamically determined according to the input data (for example, input data distribution information).

The memory 270 may be configured to store information used by the accelerator 110. The memory 270 may store the exponential function information. The exponential function information may include a quantized exponential function value. For example, the exponential function information may include a quantized exponential function value corresponding to a value "1" that is representable by the quantized input value. The accelerator 110 may determine the value of the softmax function using the exponential function information. In an embodiment of the disclosure, the memory 270 may store a plurality of exponential function information according to the maximum quantization value. The memory 270 may store output data obtained from the output module 280.

The output module 280 may output the output data including the value of the softmax function. The output module 280 may include an output buffer. The output module 280 may obtain the value of the softmax function from the LUT module 140. In an embodiment of the disclosure, the output module 280 may sequentially store, in the memory 270, the value of the softmax function output from the LUT module 140.

FIG. 2 illustrates the structure of the processor 100 and the accelerator 110 according to an embodiment of the disclosure, but the disclosure is not limited thereto. The processor 100 and the accelerator 110 may be configured to additionally include some elements, or some elements of the processor 100 and the accelerator 110 may be omitted.

In an embodiment of the disclosure, the accelerator 110 may further include a quantization module. The quantization module may be configured to perform quantization when the input data is not quantized. The maximum quantization value used by the accelerator 110 may be predetermined or may be transmitted along with the input data.

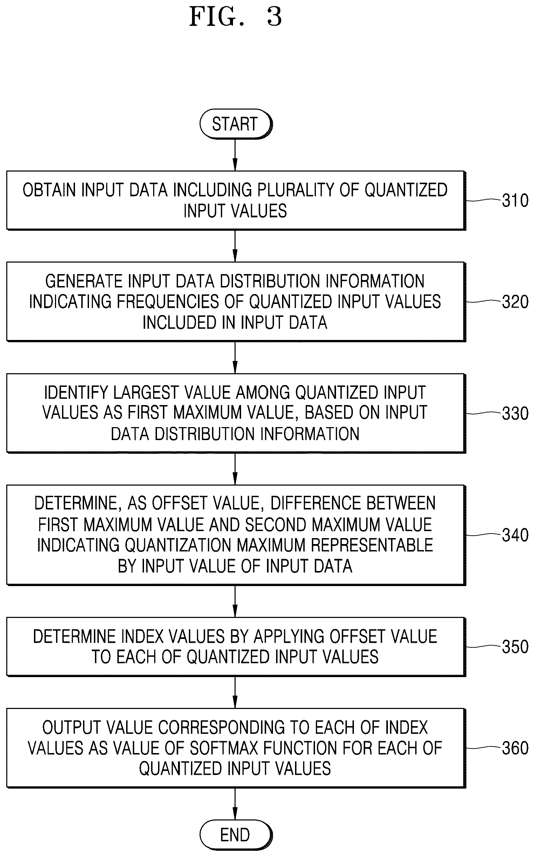

FIG. 3 is a flowchart of the operation of the processor including the accelerator for processing the softmax function, according to an embodiment of the disclosure.

At operation 310, the input module 120 according to an embodiment of the disclosure may obtain input data including a plurality of quantized input values.

At operation 320, the distribution information processing module 130 according to an embodiment of the disclosure may generate input data distribution information indicating the frequencies of the quantized input values included in the input data.

At operation 330, the distribution information processing module 130 according to an embodiment of the disclosure may identify the largest value among the quantized input values as a first maximum value, based on the input data distribution information.

At operation 340, the distribution information processing module 130 according to an embodiment of the disclosure may determine, as an offset value, a difference between the first maximum value and a second maximum value, wherein the second maximum value indicates the maximum quantization value that is representable by the input value of the input data.

At operation 350, the LUT module 140 according to an embodiment of the disclosure may determine index values by applying an offset value to each quantized input value of the quantized input values.

At operation 360, the LUT module 140 according to an embodiment of the disclosure may output a value corresponding to each of the index values as the value of the softmax function for each of the quantized input values.

The operation of the processor 100 including the accelerator 110 for processing the softmax function does not necessarily include operations 310 to 360, and some operations may be omitted or may be additionally included.

FIG. 4A is a diagram illustrating quantization of an input value, according to an embodiment of the disclosure.

Referring to FIG. 4A, an unquantized input value may be a value included in a certain range. For example, the unquantized input value may be a rational number that is greater than or equal to a lower limit $X_{min}$ of the input value and less than (or less than or equal to) an upper limit $X_{max}$ of the input value.

A quantized input value may be an integer included in a certain range. For example, quantized input data may represent one of integers greater than or equal to "0" and less than or equal to a maximum quantization value Qmax. The maximum quantization value may be a value of "$2^N$-1" (where N is an integer). For example, the maximum quantization value may be one of "63", "127", "255", "511", or "1023".

Values included in a certain range may be quantized to the same value. For example, a value greater than or equal to $X_{min}$ and less than $X_{min}$+scale_x may be quantized to "0", and a value greater than or equal to $X_{min}$ +scale_x and less than $X_{min}$+2*scale_x may be quantized to "1". The quantization scale scale_x may be determined based on the maximum quantization value. For example, the quantization scale may be greater than or equal to $X_{min}$, and the range less than $X_{max}$ may be divided into equal parts by the maximum quantization value. For example, scale_x may be determined as ($X_{max}$-$X_{min}$)/Qmax.

In an embodiment of the disclosure, input data $x_i$ may be quantized to an integer m that satisfies m=($x_i$-$x_{min}$)/scale_x. For example, unquantized input data $x_i$ may be represented by Equation 2 using quantized input data m.

[Equation 2]

$$x_i \approx m * scale\_x + x_{min}$$

However, the disclosure is not limited thereto, and the quantization scale scale_x may be determined differently for each section due to a design change made by those of ordinary skill in the art.

In an embodiment of the disclosure, the accelerator 110 may quantize at least one of input data or output data. The accelerator 110 according to an embodiment of the disclosure may obtain quantized input data. The input data and the output data may include at least one from among vector-type data, matrix-type data, or tensor-type data including a plurality of quantized values. The input data may have the same vector-type, matrix-type, or tensor-type data size as the output data. The input data and the output data may be quantized to have the same maximum quantization value.

When the input data of the accelerator 110 of FIG. 1 according to an embodiment of the disclosure is quantized, the memory capacity required to store the data is reduced. In addition, calculating integers has an advantage of lower computational complexity than calculating decimals.

FIG. 4B is a diagram illustrating quantization of an exponential function value, according to an embodiment of the disclosure.

Referring to FIG. 4B, an unquantized exponential function value EXP may be a value included in a certain range. For example, the unquantized exponential function value may be a rational number that is greater than or equal to a lower limit $e_{min}$ of the exponential function value and less than (or less than or equal to) an upper limit $e_{max}$ of the exponential function value. The lower limit of the exponential function may be the exponential function value for the lower limit of the input value, and the upper limit of the exponential function may be the exponential function value for the upper limit of the input value.

A quantized exponential function value (illustrated as "Quantized EXP") may be an integer included in a certain range. An exponential function value may be quantized based on a quantization scale scale_EXP of the exponential function. The quantization scale scale_EXP of the exponential function may be determined based on the upper limit of the exponential function and the lower limit of the exponential function. For example, scale_EXP may be determined as ($e_{max}$-$e_{min}$)/Emax. The maximum quantization value (Emax may be a predetermined value. For example, Emax may be "$2^{64}$".

According to an embodiment of the disclosure, the exponential function value EXP may be quantized so that the quantization value for the lower limit $e_{min}$ is "0". Referring to a first graph 410b, the quantized exponential function value may represent one of the integers greater than or equal to "0" and less than or equal to Emax. For example, the exponential function value $e_i$ may be quantized to an integer n that satisfies Equation 3.

[Equation 3]

$$e_i \approx n * scale\_EXP + e_{min}$$

According to an embodiment of the disclosure, the exponential function value may be quantized so that the quantization value for the lower limit $e_{min}$ is a particular constant. Referring to a second graph 420b, the quantized exponential function value may represent one of the integers greater than or equal to a constant "ZP" and less than or equal to "Emax+ZP". The second graph 420b may be obtained by parallel movement of the first graph 410b by ZP in the y-axis direction. In an embodiment of the disclosure, the particular constant may be determined based on the lower limit and the quantization scale. For example, the particular constant ZP may be determined as ZP=$e_{min}$/scale_EXP. In this example, Equation 3 may be expressed as Equation 4.

[Equation 4]

$$e_i \approx n * scale_{EXP} + e_{min} = \left( n + \frac{e_{min}}{scale_{EXP}} \right) * scale_{EXP} = (n + ZP) * scale_{EXP}$$

The exponential function information according to an embodiment of the disclosure may include the quantized exponential function value described with reference to the first graph 410b or may include the quantized exponential function value described with reference to the second graph 420b.

FIG. 4C is a diagram illustrating quantization of an input value and an exponential function value, according to an embodiment of the disclosure.

Referring to FIG. 4C, a third graph 410c based on unquantized data and a fourth graph 420c based on quantized data are shown. The third graph 410c is a graph between an input value (illustrated as "Input") and an exponential function value (illustrated as "EXP"). According to an embodiment of the disclosure, the input value and the exponential function value EXP may each be quantized. The fourth graph 420c is a graph between a quantized exponential function value (illustrated as "Quantized EXP") and a quantized input value (illustrated as "Quantized input").

According to an embodiment of the disclosure, the input value may be quantized based on the maximum quantization value Qmax for the input value, and the exponential function value may be quantized based on the maximum quantization value Emax for the exponential function value. For example, the input value may be quantized as illustrated in FIG. 4A, and the exponential function value may be quantized as in the first graph 410b or the second graph 420b illustrated in FIG. 4B.

The fourth graph 420c may represent the values $E_0$, $E_1$, ..., $E_{Qmax}$ of the exponential function for the quantized input values "0", "1", ..., Qmax. According to an embodiment of the disclosure, the exponential function value for the lower limit may be set to "0" as illustrated in the first graph 410b of FIG. 4B, or the exponential function value for the lower limit may be set to a particular constant (e.g., the constant ZP) as illustrated in the second graph 420b.

FIG. 5 is a diagram illustrating an operation of modifying input data distribution information, according to an embodiment of the disclosure.

Referring to FIG. 5, input data is data in which a maximum quantization value is quantized to "255", according to an embodiment of the disclosure. Input data distribution information may be represented in the form of a first graph 510 or a first table 520. However, the input data distribution information may be various types of information representing frequency information of input values. In an embodiment of the disclosure, at least one of the first graph 510 or the first table 520 may be generated by the distribution information processing module 130 of FIG. 1.

The distribution information processing module 130 may identify the largest value among the input values as a first maximum value using the input data distribution information. For example, because the largest value whose frequency is not 0 in the first graph 510 and the first table 520 is "161", the distribution information processing module 130 may identify "161" as the first maximum value.

The distribution information processing module 130 may determine an offset value based on the first maximum value and the maximum quantization value. The offset value may be determined by subtracting the first maximum value from the maximum quantization value. The distribution information processing module 130 may determine the offset value to be "94", which may be obtained by subtracting the first maximum value "161" from the maximum quantization value "255".

Based on the offset value, the distribution information processing module 130 may generate modified input data distribution information based on the input data distribution information. The modified input data distribution information may be information that is updated to the input data distribution information or may be newly generated information separate from the input data distribution information. The distribution information processing module 130 may modify the input data distribution information representing the first graph 510 or the first table 520 to the modified input data distribution information representing the second graph 530 or the second table 540 by shifting the input data distribution information by the offset value (e.g., the value "94"). The input data distribution information may be represented in the form of the second graph 530 or the second table 540. However, like the input data distribution information, the modified input data distribution information may be various types of information corresponding to the frequency information of the input value.

The distribution information processing module 130 may generate modified input data distribution information by shifting the input data distribution information by the offset value. The distribution information processing module 130 may generate the modified input data distribution information in which the frequency of the input value of the input data distribution information is shifted by the offset value. For example, the distribution of the second graph 530 may be the same as the result of right shifting the distribution of the first graph 510 by the offset value. For example, the distribution of the second table 540 may be the same as the distribution of the first table 520 shifted by adding the offset value. As shown in FIG. 5, a frequency Yi corresponding to the quantization value "i" of the first table 520 may mean the frequency of the input value being the same as "i". A frequency $Z_i$ of the second table 540 may be equal to a frequency $Y_{i+offset}$, where "offset" denotes the offset value. The frequency $Y_{i+offset}$ may be same as the frequency of the input value being shifted by the offset value.

By generating the modified input data distribution information, the distribution information processing module 130 may obtain data distribution information that has the same distribution as the input data and has a greater value than the input data. Because the distribution information processing module 130 generates the modified input data distribution information, the accelerator 110 may increase the accuracy of the value of the softmax function.

FIG. 6 is a diagram illustrating an operation of calculating a denominator value of a softmax function, according to an embodiment of the disclosure.

Referring to FIG. 6, exponential function information 620 may include a quantized exponential function value (illustrated "output") corresponding to a quantized input value (illustrated "input"). The exponential function information 620 may include quantized input values i (e.g., "0", "1", ..., Qmax) and exponential function values (e.g., $E_0$, $E_1$, ..., $E_{Qmax}$) corresponding to the input values. According to an embodiment of the disclosure, the input value may be quantized based on the maximum quantization value Qmax for the input value, and the exponential function value may be quantized based on the maximum quantization value Emax for the exponential function value. For example, the input value may be quantized as illustrated in FIG. 4A, and the exponential function value may be quantized as in the first graph 410b or the second graph 420b illustrated in FIG. 4B.

As shown in Equation 1, the sum of the exponential functions may be used to calculate the value of the softmax function. The processor 100 may determine the sum of the exponential functions using the input data distribution information 610 and the exponential function information 620. For example, the processor 100 may calculate the sum of the exponential functions by multiplying the corresponding values between the input data distribution information 610 and the exponential function information 620. According to an embodiment of the disclosure, the processor 100 may calculate the sum of the exponential functions by multiplying the input data distribution information 610 by the result of adding a certain constant (e.g., ZP) to the exponential function information 620. The input data distribution information 610 may be one of the input data distribution information and the modified input data distribution information illustrated in FIG. 5.

The value of the softmax function may be represented by Equation 1. According to an embodiment of the disclosure, the processor 100 may determine the value of the softmax function based on the quantized input data and the quantized exponential function value. For example, the processor 100 may determine the value of the softmax function as shown in Equation 5.

[Equation 5]

$$y_i = \frac{e^{x_i}}{\sum e^{x_j}} \approx = \frac{e^{m \cdot scale\_x}/scale\_EXP}{\sum e^{n \cdot scale\_x}/scale\_EXP} = \frac{E_m}{\sum E_n} = Y_m$$

When the value of the softmax function is calculated using the quantized input data and the quantized exponential function value, the same value as the value of the softmax function using the unquantized exponential function may be obtained.

According to an embodiment of the disclosure, when the exponential function information 620 includes the quantized exponential function value, a data storage space may be reduced and an operation speed may be improved. For example, each exponential function value may be reduced by quantizing the exponential function information, and a product or sum operation may be performed quickly by representing an integer value.

However, when the exponential function is quantized, errors may occur due to quantization. The exponential function may be quantized based on the largest and value and the least value of the exponential function. Because the exponential function increases exponentially, the error may be larger as the exponential function value is smaller. For example, exp(0)=1, exp(1)=2.71, and exp(7)=1073.46. For example, when the exponential function value is quantized to [0, 255], scale_EXP may be about "4.2" (or, e.g., an integer "4"), $E_0$=0, $E_1$=0, and $E_7$=255. Here, $E_i$ may denote a value obtained by quantizing the exponential function of i. There is a difference in the values of exp(0) and exp(1), but the quantized values may equally represent "0". Therefore, when the input value of the input data is small, the error of the quantized exponential function is large, and when the input value of the input data is large, the error of the quantized exponential function is small. Similarly, the error in the value of the softmax function of the input data may decrease as the input data becomes larger. For example, the value of the softmax function may be more similar to reality when the input data is [253, 254, 255] than when the input data is [0, 1, 2].

The processor 100 may generate modified input distribution information by shifting the input distribution information generated by the distribution information processing module 130 using the offset value. The processor 100 may determine the value of the softmax function with a small error using the modified input distribution information.

In an embodiment of the disclosure, the exponential function information 620 may be stored in the memory 270. In an embodiment of the disclosure, the accelerator 110 may calculate the denominator value of the softmax function based on the input data distribution information 610 and the exponential function information 620.

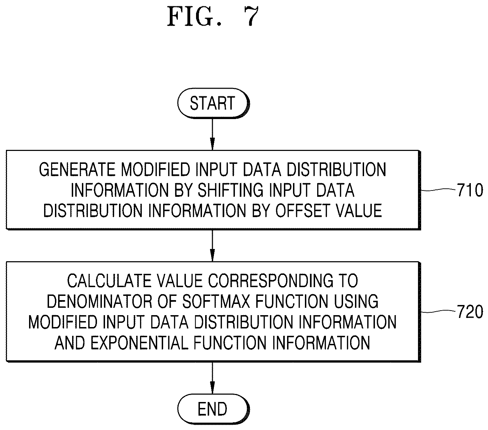

FIG. 7 is a flowchart of the operation of the distribution information processing module and the input module of the accelerator, according to an embodiment of the disclosure.

At operation 710, the distribution information processing module 130 according to an embodiment of the disclosure may generate modified input data distribution information by shifting input data distribution information by an offset value.

At operation 720, the operation module 240 according to an embodiment of the disclosure may calculate a value corresponding to the denominator of the softmax function (or the sum of the exponential functions) using the modified input data distribution information and the exponential function information. The exponential function information may include an exponential function value corresponding to the quantized value. The operation module 240 according to an embodiment of the disclosure may calculate a value corresponding to the denominator of the softmax function by performing product and sum operations between the modified input data distribution information and the exponential function information.

In an embodiment of the disclosure, a plurality of values stored in the LUT module 140 may be values determined based on the value corresponding to the denominator of the softmax function. For example, the values stored in the LUT module 140 may be the value of the softmax function determined using the value corresponding to the denominator of the softmax function calculated by the operation module 240.

In some embodiments, operations of the distribution information processing module 130 and the input module 120 of the accelerator 110 according to an embodiment of the disclosure do not necessarily include operations 710 and 720, and some operations may be omitted or may be additionally included.

FIG. 8A is a flowchart of the operation of the parameter module of the accelerator, according to an embodiment of the disclosure.

At operation 810a, the parameter module 250 according to an embodiment of the disclosure may determine at least one parameter for representing an approximate value that approximates the value corresponding to the denominator of the softmax function. In an embodiment of the disclosure, the at least one parameter may include a first parameter and a second parameter, and a value obtained by dividing the second maximum value by the denominator of the softmax function may be determined based on a value obtained by performing a right shift operation on the first parameter by the second parameter.

At operation 820a, the post-processing module 260 according to an embodiment of the disclosure may determine the value of the softmax function corresponding to the quantization value, based on the at least one parameter and the exponential function information. In an embodiment of the disclosure, the LUT module 140 may store the value of the softmax function generated by the post-processing module 260.

The operation of the parameter module 250 of the accelerator 110 according to an embodiment of the disclosure does not necessarily include operations 810a and 820a, and some operations may be omitted or may be additionally included.

FIG. 8B is a flowchart of the operation of the parameter module of the accelerator, according to an embodiment of the disclosure.

The method of determining the parameter, according to an embodiment of the disclosure, may be performed by the parameter module 250 of FIG. 2. The parameter module 250 may determine the parameter based on the maximum quantization value QMAX and the sum SUM of the quantized exponential functions. The parameter may include a first parameter MULT and a second parameter RSHAMT. The parameter may be a value for approximating a value obtained by dividing the maximum quantization value by the sum of the quantized exponential functions. In an embodiment of the disclosure, the value obtained by dividing the maximum quantization value by the sum of the quantized exponential functions may be approximated as a value obtained by performing a right shift operation on the first parameter by the second parameter.

At operation 810b, the parameter module 250 may determine a value of a variable for determining the parameter. A variable DIVIDEND may be initialized to the maximum quantization value. A variable DIVISOR may be initialized to the sum of the exponential functions. A variable RSHMAT may be initialized to "0". The parameter module 250 may proceed to operation 820b.

At operation 820b, the parameter module 250 may compare a magnitude of the variable DIVISOR with a magnitude of the variable DIVIDEND. For example, the parameter module 250 may identify whether the variable DIVISOR is greater than the variable DIVIDEND. When the variable DIVISOR is greater than the variable DIVIDEND, the parameter module 250 may proceed to operation 830b. When the variable DIVISOR is less than or equal to the variable DIVIDEND, the parameter module 250 may proceed to operation 840b.

At operation 830b, the parameter module 250 may update the value of the variable DIVIDEND and the value of the variable RSHMAT. In an embodiment of the disclosure, the parameter module 250 may perform a left shift operation on the value of the variable DIVIDENDFor example, the parameter module 250 may perform left shifting the value of the variable DIVIDEND by 1. For example, the parameter module 250 may update the value of the variable DIVIDEND with a value that is doubled. In an embodiment of the disclosure, the parameter module 250 may update the value of variable RSHMAT with a value increased by 1. For example, when the value of the variable RSHMAT is 0, the parameter module 250 may change the value of the variable RSHMAT to 1. The parameter module 250 may proceed to operation 832b.

At operation 832b, the parameter module 250 may compare a magnitude of the variable DIVISOR with a magnitude of the variable DIVIDEND. For example, the parameter module 250 may identify whether the variable DIVISOR is greater than the variable DIVIDEND. When the variable DIVISOR is greater than the variable DIVIDEND, the parameter module 250 may proceed to operation 830b. When the variable DIVISOR is less than or equal to the variable DIVIDEND, the parameter module 250 may proceed to operation 850b.

At operation 840b, the parameter module 250 may update the value of the variable DIVISOR and the value of the variable RSHMAT. In an embodiment of the disclosure, the parameter module 250 may perform a left shift operation on the value of the variable DIVISOR. For example the parameter module 250 may perform left shifting the value of the variable DIVISOR by 1. That is, the parameter module 250 may update the value of the variable DIVISOR with a value that is doubled. In an embodiment of the disclosure, the parameter module 250 may update the value of variable RSHMAT with a value decreased by 1. For example, when the value of the variable RSHMAT is 0, the parameter module 250 may change the value of the variable RSHMAT to -1. The parameter module 250 may proceed to operation 842b.

At operation 842b, the parameter module 250 may compare a magnitude of the variable DIVISOR with a magnitude of the variable DIVIDEND. For example, the parameter module 250 may identify whether the variable DIVISOR is less than or equal to the variable DIVIDEND. When the variable DIVISOR is less than or equal to the variable DIVIDEND, the parameter module 250 may proceed to operation 840b. When the variable DIVISOR is greater than the variable DIVIDEND, the parameter module 250 may proceed to operation 844b.

At operation 844b, the parameter module 250 may update the value of the variable DIVISOR and the value of the variable RSHMAT. In an embodiment of the disclosure, the parameter module 250 may perform a right shift operation on the value of the variable DIVISOR. For example by right shifting the value of the variable DIVISOR by 1. That is, the parameter module 250 may update the value of the variable DIVISOR with a value that is halved. In an embodiment of the disclosure, the parameter module 250 may update the value of variable RSHMAT with a value increased by 1. For example, when the value of the variable RSHMAT is -1, the parameter module 250 may change the value of the variable RSHMAT to 0. The parameter module 250 may proceed to operation 850b.

At operation 850b, the parameter module 250 may determine a value of a variable for determining the parameter. The parameter module 250 may update the value of the variable DIVIDEND with the difference between the value of the variable DIVIDEND and the value of the variable DIVISOR. The parameter module 250 may determine the variable MULT to be 1. The parameter module 250 may determine the variable MULT_BITS to be 1. In an embodiment of the disclosure, the parameter module 250 may determine the variable MULT and the variable MULT_BITS prior to operation 850b. For example, the parameter module 250 may determine the variable MULT and the variable MULT_BITS at operation 810b. The parameter module 250 may proceed to operation 860b.

At operation 860b, the parameter module 250 may compare a magnitude of the variable DIVISOR with a magnitude of the variable DIVIDEND. For example, the parameter module 250 may identify whether the variable DIVISOR is greater than the variable DIVIDEND. When the variable DIVISOR is greater than the variable DIVIDEND, the parameter module 250 may proceed to operation 870b. When the variable DIVISOR is less than or equal to the variable DIVIDEND, the parameter module 250 may proceed to operation 875b.

At operation 870b, the parameter module 250 may update the value of the variable DIVIDEND, the value of the variable MULT, the value of the variable MULT_BITS, and the value of the variable RSHMAT. In an embodiment of the disclosure, the parameter module 250 may perform a left shift operation on the value of the variable DIVIDEND For example by left shifting the value of the variable DIVIDEND by 1. That is, the parameter module 250 may update the value of the variable DIVIDEND with a value that is doubled. In an embodiment of the disclosure, the parameter module 250 may perform a left shift operation on the value of the variable MULT. For example by left shifting the value of the variable MULT by 1. In an embodiment of the disclosure, the parameter module 250 may update the value of the variable MULT_BITS with a value increased by 1. For example, when the value of the variable MULT_BITS is 1, the parameter module 250 may change the value of the variable MULT_BITS to 2. In an embodiment of the disclosure, the parameter module 250 may update the value of variable RSHMAT with a value increased by 1. For example, when the value of the variable RSHMAT is

1, the parameter module 250 may change the value of the variable RSHMAT to 2. The parameter module 250 may proceed to operation 880b.

At operation 875b, the parameter module 250 may update the value of the variable DIVIDEND with the difference between the value of the variable DIVIDEND and the value of the variable DIVISOR. The parameter module 250 may update the value of the variable MULT with a value increased by 1. The parameter module 250 may proceed to operation 880b.

At operation 880b, the parameter module 250 may identify whether the variable BITS_MAX is greater than the variable MULT_BITS. When the variable BITS_MAX is greater than the variable MULT_BITS, the parameter module 250 may proceed to operation 860b. When the variable BITS_MAX is less than or equal to the variable MULT_BITS, the parameter module 250 may proceed to operation 890b.

At operation 890b, the parameter module 250 may transmit the variable MULT and the variable RSHAMT to the post-processing module 260.

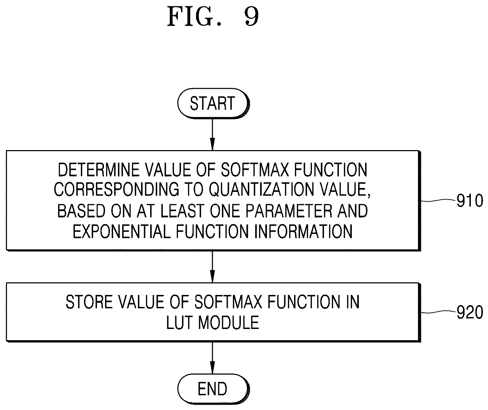

FIG. 9 is a flowchart of the operation of the post-processing module of the accelerator, according to an embodiment of the disclosure.

At operation 910, the post-processing module 260 according to an embodiment of the disclosure may determine the value of the softmax function corresponding to the quantization value, based on at least one parameter and exponential function information.

At operation 920, the post-processing module 260 according to an embodiment of the disclosure may store the value of the softmax function in the LUT module 140.

The operation of the post-processing module 260 does not necessarily include operations 910 and 920, and some operations may be omitted or may be additionally included.

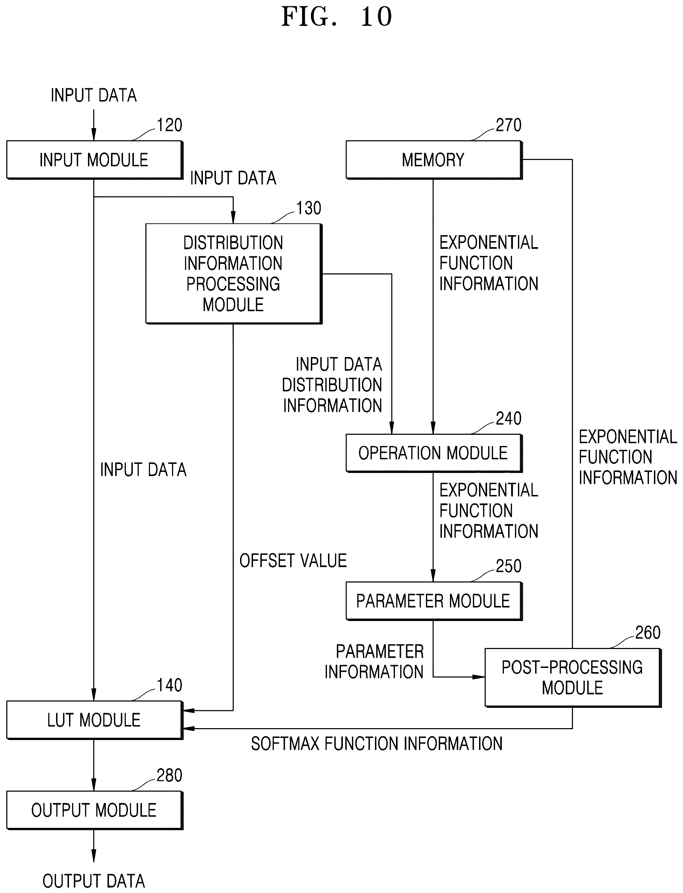

FIG. 10 is a block diagram illustrating the operation of the accelerator, according to an embodiment of the disclosure.

Referring to FIG. 10, the accelerator 110 according to an embodiment of the disclosure may generate output data representing the value of the softmax function of the input data, based on the input data.

According to an embodiment of the disclosure, the accelerator 110 may obtain the input data using the input module 120. The input data may be obtained from the memory 270 or from an outside the accelerator 110. According to an embodiment of the disclosure, the input module 120 may sequentially obtain the input data using the input buffer. For example, the input data may have a size of 1x1xD vector-type data and may include quantized input values. The input module 120 may transmit the input data to the distribution information processing module 130 and the LUT module 140. According to an embodiment of the disclosure, the accelerator 110 may include an input module 120 configured to directly transmit the input data to the distribution information processing module 130 and the LUT module 140.

According to an embodiment of the disclosure, the distribution information processing module 130 may generate input data distribution information based on the input data obtained from the input module 120. The input data distribution information may indicate the frequencies of the input values of the input data.

The distribution information processing module 130 may determine an offset value based on the input data distribution information. The offset value may refer to the difference between the second maximum value representing the maximum quantization value and the first maximum value which is the largest value included in the input data (the largest value among the input values). For example, when the maximum quantization value is 255 and the largest value among the input values is 164, the distribution information processing module 130 may determine the offset value to be 91. The distribution information processing module 130 may transmit the offset value to the LUT module 140.

The distribution information processing module 130 may generate modified input data distribution information based on the input data distribution information and the offset value. The distribution information processing module 130 may generate the modified input data distribution information by shifting the input data distribution information by the offset value. The distribution information processing module 130 may transmit the modified input data distribution information to the operation module 240. According to an embodiment of the disclosure, the distribution information processing module 130 may transmit the input data distribution information to the operation module 240 without determining the offset value, based on the result of comparing the first maximum value with the reference value.

According to an embodiment of the disclosure, the operation module 240 may calculate the sum of the exponential functions (or the value corresponding to the denominator of the softmax function) based on the modified input data distribution information (or the input data distribution information) obtained from the distribution information processing module 130.

According to an embodiment of the disclosure, the memory 270 may store exponential function information including the exponential function value corresponding to the quantization value. The operation module 240 may obtain the exponential function information from the memory 270.

The operation module 240 may calculate the sum of the exponential functions based on the modified input data distribution information obtained from the distribution information processing module 130 and the exponential function information obtained from the memory 270. According to an embodiment of the disclosure, the operation module 240 may be a MAC operation module configured to perform product and sum operations. The operation module 240 may calculate the sum of the exponential functions by calculating the sum of the values obtained by multiplying the frequency of the input value of the input data distribution information by the exponential function value of the exponential function information. For example, when the frequency of input value i is $f_i$ and the exponential function value being $Y_i$, the operation module 240 may calculate the sum of the exponential functions using the sum of the products of $f_i$ and $Y_i$ for all i. Because the operation module 240 is configured to perform product and sum operations, the operation module 240 may also be utilized in an AI operation including a convolution operation. The operation module 240 may transmit the sum of the exponential functions to the parameter module 250.

According to an embodiment of the disclosure, the parameter module 250 may determine at least one parameter for a softmax operation, based on the sum of the exponential functions obtained from the operation module 240. When the accelerator 110 outputs the value of the quantized softmax function, the parameter module 250 may determine at least one parameter for approximating the maximum quantization value of the output data and the sum of the exponential functions. For example, the parameter module 250 may determine parameters so that a value obtained by dividing the maximum quantization value of the output data by the sum of the exponential functions is approximated using the first parameter and the second parameter. For example, the value obtained by dividing by the maximum quantization value of the output data by the sum of the exponential functions may be approximated to a value obtained by performing a right shift operation on the first parameter by the second parameter. In this example, the parameter module 250 may determine the first parameter and the second parameter based on the maximum quantization value of the output data and the sum of the exponential functions. The parameter module 250 may determine the parameter using at least one of a shift operation, a product operation, or a sum operation. The parameter module 250 may transmit the determined at least one parameter to the post-processing module 260.

According to an embodiment of the disclosure, the post-processing module 260 may obtain exponential function information from the memory 270. The post-processing module 260 may generate softmax function information including the value of the softmax function, based on the at least one parameter obtained from the parameter module 250 and the exponential function information obtained from the memory 270. Because the at least one parameter may be used to approximate the sum of the exponential functions, and the exponential function information may include the exponential function value corresponding to each quantization value, the post-processing module 260 may determine the value of the softmax function by dividing the exponential function value corresponding to each quantized value by the sum of the exponential functions. The post-processing module 260 may transmit the softmax function information to the LUT module 140.

According to an embodiment of the disclosure, the LUT module 140 may generate output data including the value of the softmax function corresponding to the input data, based on the input data obtained from the input module 120, the offset value obtained from the distribution information processing module 130, and the softmax function information obtained from the post-processing module 260. The LUT module 140 may include a LUT that stores a plurality of values and outputs a value corresponding to each index value among the values. The LUT module 140 may store the softmax function information in the LUT.

The LUT module 140 may generate index values corresponding to input values by adding an offset value to the input values of the input data. The LUT module 140 may sequentially identify input values of the input data and generate index values by adding an offset value to the identified values.

The LUT module 140 may generate output data including the value of the softmax function, based on the generated index values and the LUT in which softmax function information is stored. The LUT module 140 may obtain (or identify) the value of the softmax function corresponding to the generated index value by referring to the LUT in which softmax function information is stored. The LUT module 140 may transmit the output data to the output module 280. The size of the output data may be equal to the size of the input data. For example, the size of the output data may be vector-type data having a size of 1x1xD, which may be equal to the size of the input data. The output data may include the value of the quantized softmax function as the output value. The output value of the output data may be quantized in the same maximum quantization value range as the input value.

According to an embodiment of the disclosure, the output module 280 may transmit, to the outside of the accelerator 110, the output data obtained from the LUT module 140 or may store, in the memory 270, the output data obtained from the LUT module 140.

In FIG. 10, the input module 120 and the output module 280 of the accelerator 110 according to an embodiment of the disclosure may simply be lines configured to transmit information. When the input module 120 of the accelerator 110 is simply a line configured to transmit information, the input data may be directly transmitted to the distribution information processing module 130 and the LUT module 140. When the output module 280 of the accelerator 110 is simply a line configured to transmit information, the output data may be directly transmitted from the LUT module 140 to the outside of the accelerator 110 or the memory.

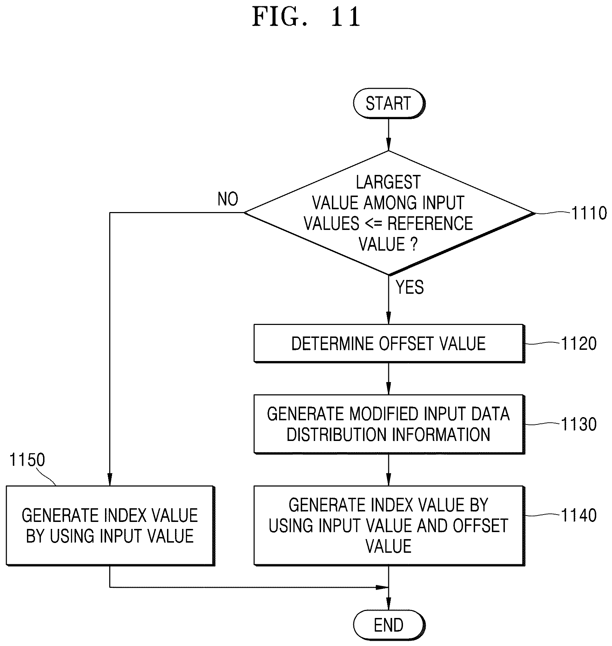

FIG. 11 is a flowchart of an operating method of the processor according to the input data, according to an embodiment of the disclosure.

In an embodiment of the disclosure, the accelerator 110 may compare the largest value (e.g., the first maximum value) of the input data with the predetermined reference value, and an offset may be applied only when the first maximum value is less than the reference value. When the first maximum value is greater than the reference value, this may mean that the accuracy of the softmax function may be maintained even without applying an offset. Accordingly, the accelerator 110 may process the softmax function without applying an offset. The reference value may be determined as an appropriate value according to the required accuracy or the degree of available resources. For example, as the reference value is set to be higher, it is highly likely that an offset will be applied. Accordingly, the accelerator 110 may increase accuracy even when fewer resources are used.

At operation 1110, the accelerator 110 according to an embodiment of the disclosure may compare the largest value among the input values of the input data with the reference value. In an embodiment of the disclosure, the reference value may be a predetermined value. According to an embodiment of the disclosure, when the maximum quantization value is "255" and the reference value is set to "128", which is the middle value of "255", the accelerator 110 may determine whether the maximum value among the input values is less than the reference value of "128". For example, the reference value may be a predetermined value according to the range of the values of the input data.

The accelerator 110 proceeds to operation 1120 based on the first maximum value, which is the largest value among the input values, being less than or equal to the reference value, and proceeds to operation 1140 based on the first maximum value being greater than the reference value. Operation 1110 may be performed by a separate module of the accelerator 110, or may be performed by the distribution information processing module 130.

At operation 1120, the distribution information processing module 130 according to an embodiment of the disclosure may determine an offset value. Operation 1120 according to an embodiment of the disclosure may correspond to operation 340 of FIG. 3. At operation 1130, the distribution information processing module 130 according to an embodiment of the disclosure may generate modified input data distribution information. Operation 1130 according to an embodiment of the disclosure may correspond to operation 710 of FIG. 7. At operation 1140, the LUT module 140 according to an embodiment of the disclosure may generate the index value using the input value and the offset value. Operation 1140 according to an embodiment of the disclosure may correspond to operation 350 of FIG. 3.

At operation 1150, the LUT module 140 according to an embodiment of the disclosure may generate the index value using the input value. The LUT module 140 may determine the input value as the index value. In an embodiment of the disclosure, the accelerator 110 may not determine the offset value based on the input value being less than the reference value. In addition, the accelerator 110 may not generate modified input data distribution information.

Based on the maximum value among the input values being greater than the reference value, the accelerator 110 may obtain the value of the softmax function without performing the operation of applying the offset value. The accelerator 110 may reduce an operation time by not performing the operation of applying the offset value.

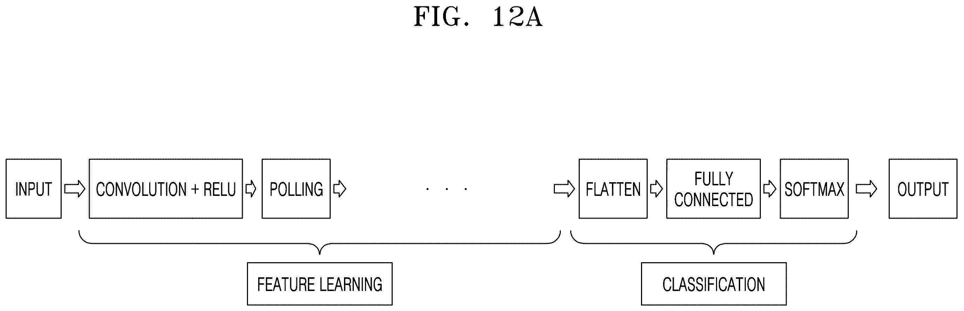

FIG. 12A is a diagram illustrating a process in which the processor performs an AI operation, according to an embodiment of the disclosure.

Referring to FIG. 12A, an AI operation according to an embodiment of the disclosure may include a convolution operation, a rectified linear unit (ReLU) operation, a polling operation, a fully connected (FC) operation, and a softmax operation. An AI model having the structure illustrated in FIG. 12A may be referred to as a convolutional neural network (CNN) model. The CNN may be used in the fields of image processing, such as object recognition.

The processor 100 may perform at least one of CNN operations using the accelerator 110. For example, the processor 100 may perform the convolution operation, the polling operation, the FC operation, and the softmax operation using the accelerator 110. The convolution operation, the polling operation, and the FC operation may only be implemented as sum, product, and shift operations. However, in order to directly perform the softmax operation, an exponential function operation and a division operation are required. However, the processor 100 may process the softmax function using the input module 120, the distribution information processing module 130, and the LUT module 140 of the accelerator 110. Accordingly, the electronic device may process both other AI operations and the softmax operation using the accelerator 110 of the processor 100.

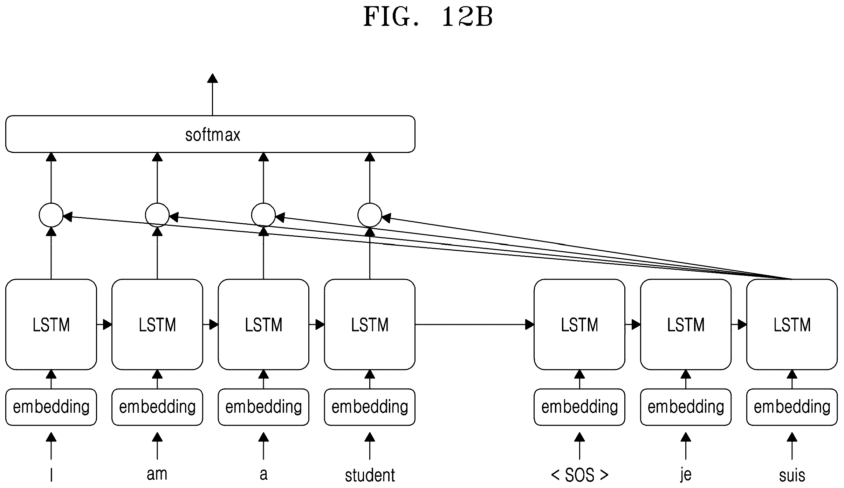

FIG. 12B is a diagram illustrating a process in which the processor performs an AI operation, according to an embodiment of the disclosure.

Referring to FIG. 12B, an AI operation may include a long short-term memory (LSTM) model operation and a softmax operation according to an embodiment of the disclosure. An AI model having the structure illustrated in FIG. 12B may be used in the field of natural language processing. For natural language processing, the electronic device may provide weights to data (e.g., embeddings corresponding to input words as shown in FIG. 12B) using a softmax function.

As illustrated in FIG. 12B, the processor 100 according to an embodiment of the disclosure may perform the softmax operation using the accelerator 110. The electronic device may process the softmax operation required for natural language processing using the accelerator 110 of the processor 100. Similarly, according to an embodiment of the disclosure, the processor 100 may be used to process softmax operations for generative AI or large language model (LLM).

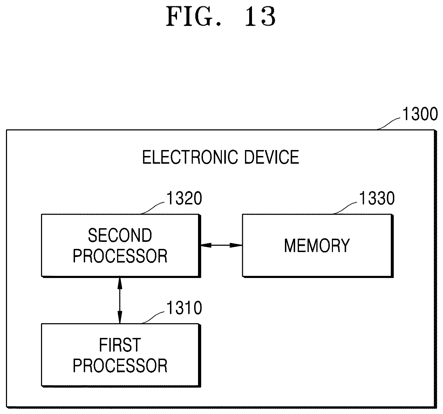

FIG. 13 is a block diagram illustrating an electronic device according to an embodiment of the disclosure.

Referring to FIG. 13, an electronic device 1300 may be a device that processes or is configured to process input information and performs a function corresponding to an input. For example, the electronic device 1300 may include an image display device, a mobile terminal, and a home appliance. For example, the electronic device 1300 may be at least one of a television (TV), a smartphone, a tablet, an air conditioner, a washing machine, or a vacuum cleaner. The electronic device 1300 according to an embodiment of the disclosure may include a first processor 1310, a second processor 1320, and a memory 1330. In an embodiment of the disclosure, the electronic device 1300 may further include a communication module and a display. The first processor 1310 may include one of the processor 100 of FIG. 1 and the processor 100 of FIG. 2, and some elements may be added to or removed from the processor 100.

In an embodiment of the disclosure, the second processor 1320 may control overall operations of the electronic device 1300. The second processor 1320 may control the operation of the electronic device 1300 by loading at least one instruction stored in the memory 1330. The second processor 1320 may perform various data processing or operations in order to control the communication module and the display. The second processor 1320 may include at least one of a CPU, an application processor (AP), or an image signal processor (ISP).

In an embodiment of the disclosure, the first processor 1310 may be a processor that processes or is configured to process an AI operation. For example, the processing speed of the AI operation of the first processor 1310 may be faster than the processing speed of the AI operation of the second processor 1320. The first processor 1310 may include at least one of a GPU or a neural processing unit (NPU).

In an embodiment of the disclosure, the first processor 1310 may train a neural network. The first processor 1310 may perform an operation of training a neural network, based on input information. The first processor 1310 may perform repetitive training in a manner such as machine learning (ML).

In an embodiment of the disclosure, the first processor 1310 may analyze input data using the trained neural network. The first processor 1310 may allow the second processor 1320 to use the result of analyzing the input data. The second processor 1320 may implement AI using the analysis result of the first processor 1310.

In an embodiment of the disclosure, the communication module may allow the electronic device 1300 to establish a communication connection with an external electronic device or a server. The communication module may include at least one communication processor (CP) that supports wireless communication. The communication module may establish a wired or wireless communication channel between the electronic device 1300 and at least one of the external electronic device or the server. The communication module may transmit, to the second processor 1320, a signal notifying the establishment of the wired or wireless communication channel. The communication module may receive, from the second processor 1320, a signal allowing the establishment of the wired or wireless communication channel. The second processor 1320 may determine whether to permit the establishment of the wired or wireless communication channel, based on the analysis result of the first processor 1310.

In an embodiment of the disclosure, the communication module may support the electronic device 1300 to transmit and receive signals or data to and from the external electronic device or the server through the established wired or wireless communication channel. For example, when the electronic device 1300 is an image display device, the communication module may establish the wired or wireless communication channel with the external electronic device or the server and may receive image data from the external electronic device or the server. For example, when the electronic device 1300 is a mobile terminal, the communication module may establish the wireless communication channel between the electronic device 1300 and the external electronic device and may connect a call or send and receive a message through the established wireless communication channel. For example, when the electronic device 1300 is a home appliance, the communication module may be connected to the external electronic device through short-range wireless communication such as Bluetooth Low Energy (BLE) communication and may be connected to the server through long-range wireless communication such as wireless fidelity (Wi-Fi) communication. The communication module may receive information for an AI operation from at least one of the external electronic device or the server or may transmit the result of the AI operation.

In an embodiment of the disclosure, the memory 1330 may include at least one type of storage medium selected from flash memory-type memory, hard disk-type memory, multimedia card micro-type memory, card-type memory (e.g., secure digital (SD) or eXtreme Digital (XD) memory), random access memory (RAM), static random access memory (SRAM), read-only memory (ROM), electrically erasable programmable read-only memory (EEPROM), programmable read-only memory (PROM), magnetic memory, magnetic disc, and optical disc. The memory 1330 may receive commands or data from the second processor 1320. The memory 1330 may store the commands or the data received from the second processor 1320. The commands or the data stored in the memory 1330 may include a program that causes the second processor 1320 to process input data and control the operation of the electronic device 1300. The second processor 1320 may load the commands or the data stored in the memory 1330. The second processor 1320 may analyze or process the commands or the data loaded from the memory 1330 using the first processor 1310.

In an embodiment of the disclosure, the display may provide visual information to the outside of the electronic device 1300. For example, the display may display a screen related to information about the state of the electronic device 1300. For example, the display may display a screen related to an operation or a function performed by the electronic device 1300. The second processor 1320 may transmit, to the display, image data related to the result of the AI operation of the first processor 1310. For example, the display may display image data including object information in an image generated by the first processor 1310. The display may include a display panel that displays a screen and a display driver integrated circuit (DDI) that drives the display panel. For example, the display may be at least one of an organic light-emitting display (OLED), a quantum dot (QD) display, or a micro light-emitting diode (LED) display.

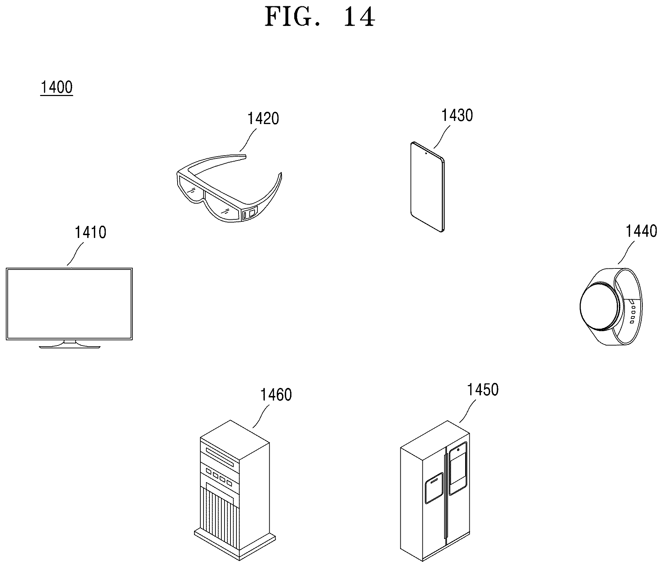

FIG. 14 is a diagram illustrating an electronic device including a processor, according to an embodiment of the disclosure.

Referring to FIG. 14, the electronic device including the processor according to an embodiment of the disclosure may include a plurality of electronic devices 1400, which may include, but is not limited to, a TV 1410, a head mounted display (HMD) 1420, a mobile device 1430 (e.g., a smartphone), a wearable device 1440, a home appliance 1450, and a server 1460. The plurality of electronic devices 1400 may each include the processor including the accelerator 110 that processes the softmax function.

The plurality of electronic devices 1400 each including the processor according to an embodiment of the disclosure may perform on-device image processing. For example, the plurality of electronic devices 1400 may perform image processing of recognizing an object included in an image using AI through the accelerator 110. In an embodiment of the disclosure, the processor 100 may obtain information about the image, perform AI image processing through the accelerator 110, and provide result information to another processor, display, or memory.

The plurality of electronic devices 1400, each of which may include the processor according to an embodiment of the disclosure, may perform on-device voice recognition. For example, the plurality of electronic devices 1400 may perform an operation of identifying a user's voice and a user command using AI through the accelerator 110. In an embodiment of the disclosure, the processor 100 may obtain voice information, perform AI voice recognition through the accelerator 110, and provide result information to another processor, display, speaker, or memory.

The plurality of electronic devices 1400 each including the processor 100 according to an embodiment of the disclosure may perform on-device natural language processing (e.g., translation). For example, the plurality of electronic devices 1400 may perform an operation of identifying the meaning and context of text or generating text using AI through the accelerator 110. In an embodiment of the disclosure, the processor 100 may obtain text information, perform AI natural language processing through the accelerator 110, and provide result information to another processor, speaker, display, or memory.

According to an embodiment of the disclosure, the server 1460 may use the processor 100 to process an AI operation on behalf of other electronic devices or perform procedures that require large-scale operations, such as large-scale language model processing.

The softmax operation may be processed quickly and accurately through the accelerator 110 according to an embodiment of the disclosure. Accordingly, the inference speed of the entire neural network may be increased (e.g., latency may be reduced). In addition, the accelerator 110 that processes the softmax function may be produced by adding a simple configuration of the processor 100 including the MAC accelerator 110. Therefore, a separate processor related to the softmax function is not required, and the softmax function and the MAC operation may be processed using only the processor 100. In this case, bandwidth and power consumption may be reduced by reducing data movement between the accelerator 110 and the separate processor.

According to an embodiment of the disclosure, a method performed by at least one processor configured to implement an accelerator for processing a softmax function is provided. The method may include obtaining, using an input module included in the accelerator, input data comprising a plurality of quantized input values. The method may include generating, using a distribution information processing module included in the accelerator, input data distribution information indicating a plurality of frequencies corresponding to the plurality of quantized input values included in the input data. The method may include identifying, using the distribution information processing module, a largest value from among the plurality of quantized input values as a first maximum value, based on the input data distribution information. The method may include determining, using the distribution information processing module, an offset value based on a difference between the first maximum value and a second maximum value, wherein the second maximum value indicates a maximum quantization value that is representable by an input value of the input data. The method may include determining, using a look-up table (LUT) module included in the accelerator, a plurality of index values by applying the offset value to each quantized input value of the plurality of quantized input values. The method may include outputting, using the LUT module, a value of the softmax function corresponding to each of the plurality of quantized input values based on the plurality of index values.

According to an embodiment of the disclosure, the method may include generating, using the distribution information processing module, modified input data distribution information by shifting the input data distribution information by the offset value. The method may include calculating, using an operation module included in the accelerator, a denominator value of the softmax function using the modified input data distribution information and exponential function information. The exponential function information may include an exponential function value corresponding to a quantized value. A plurality of values stored in the LUT module may be determined based on the denominator value of the softmax function.

According to an embodiment of the disclosure, the denominator value of the softmax function may be calculated by performing product and sum operations between the modified input data distribution information and the exponential function information by the operation module.

According to an embodiment of the disclosure, the method may include determining, using a parameter module included in the accelerator, at least one parameter for representing an approximate value corresponding to the denominator value of the softmax function.

According to an embodiment of the disclosure, the at least one parameter may include a first parameter and a second parameter. A value obtained by dividing the second maximum value by the denominator value of the softmax function may be determined based on a value obtained by performing a right shift operation on the first parameter by the second parameter.

According to an embodiment of the disclosure, the method may include determining, using a post-processing module included in the accelerator, a value of the softmax function corresponding to a quantization value, based on the at least one parameter and the exponential function information. The plurality of values stored in the LUT module may include the value of the softmax function.

According to an embodiment of the disclosure, the method may include, based on the first maximum value being less than or equal to a reference value, determining, using the LUT module, the plurality of index values by applying the offset value to each quantized input value of the plurality of quantized input values. The method may include, based on the first maximum value being greater than the reference value, determining, using the LUT module, the plurality of index values to be equal to the plurality of quantized input values.

According to an embodiment of the disclosure, the method may include sequentially storing the value of the softmax function in a memory corresponding to the accelerator using an output buffer included in an output module included in the accelerator. The method may include sequentially obtaining input data from the memory using an input buffer included in the input module.

According to an embodiment of the disclosure, the method may include controlling, using a control module included in the processor, the accelerator to output output data comprising the value of the softmax function, based on the input data.

According to an embodiment of the disclosure, the input data and the output data may include at least one from among vector-type data, matrix-type data, or tensor-type data comprising a plurality of quantized values. A size of the input data may be equal to a size of the output data. Each quantized input value of the plurality of quantized input values may represent at least one value between "0" and "$2^N$-1", where N is an integer. A value of the output data may represent at least one value from "0" to "$2^N$".

According to an embodiment of the disclosure, a processor for processing a softmax function is provided. The processor may include at least one processor configured to implement an accelerator comprising an input module, a distribution information processing module, and a look-up table (LUT) module. The input module may be configured to obtain input data including a plurality of quantized input values. The distribution information processing module may be configured to generate input data distribution information indicating a plurality of frequencies corresponding to the plurality of quantized input values included in the input data. The distribution information processing module may be configured to identify a largest value from among the plurality of quantized input values as a first maximum value, based on the input data distribution information. The distribution information processing module may be configured to determine an offset value based on a difference between the first maximum value and a second maximum value. The second maximum value may indicate a maximum quantization value that is representable by an input value of the input data. The LUT module may be configured to determine a plurality of index values by applying the offset value to each quantized input value of the plurality of quantized input values. The LUT module may be configured to output a value of the softmax function corresponding to each of the plurality of quantized input values based on the plurality of index values.

According to an embodiment of the disclosure, the distribution information processing module may be further configured to generate modified input data distribution information by shifting the input data distribution information by the offset value. The accelerator may further comprise an operation module configured to calculate a denominator value of the softmax function using the modified input data distribution information and exponential function information. The exponential function information may comprise an exponential function value corresponding to a quantized value. A plurality of values stored in the LUT module may be determined based on the denominator value of the softmax function.

According to an embodiment of the disclosure, the operation module may be further configured to process product and sum operations between matrices or perform the product and sum operations between vectors. The denominator value of the softmax function may be calculated by performing the product and sum operations between the modified input data distribution information and the exponential function information by the operation module.

According to an embodiment of the disclosure, the accelerator may further comprise a parameter module. The parameter module may be configured to determine at least one parameter for representing an approximate value corresponding to the denominator value of the softmax function.

According to an embodiment of the disclosure, the at least one parameter may comprise a first parameter and a second parameter. A value obtained by dividing the second maximum value by the denominator value of the softmax function may be determined based on a value obtained by performing a right shift operation on the first parameter by the second parameter.

According to an embodiment of the disclosure, the accelerator may further comprise a post-processing module. The post-processing module may be configured to determine a value of the softmax function corresponding to a quantization value based on the at least one parameter and the exponential function information. The plurality of values stored in the LUT module may include the value of the softmax function.

According to an embodiment of the disclosure, the LUT module may be further configured to, based on the first maximum value being less than or equal to a reference value, determine the plurality of index values by applying the offset value to each quantized input value of the plurality of quantized input values. The LUT module may be further configured to, based on the first maximum value being greater than the reference value, determine the plurality of index values to be equal to the plurality of quantized input values.

According to an embodiment of the disclosure, the accelerator may further comprise a memory and an output module. The output module may comprise an output buffer configured to sequentially store the value of the softmax function in the memory. The value of the softmax function may be output from the LUT module. The input module may comprise an input buffer configured to sequentially obtain input data from the memory.

According to an embodiment of the disclosure, the processor may further comprise a control module configured to control the accelerator to output output data including the value of the softmax function, based on the input data.

According to an embodiment of the disclosure, the input data and the output data may include at least one from among vector-type data, matrix-type data, or tensor-type data comprising a plurality of quantized values. A size of the input data may be equal to a size of the output data. Each quantized input value of the plurality of quantized input values may represent at least one value between "0" and "$2^N$-1", where N is an integer. A value of the output data may represent at least one value from "0" to "$2^N$".

According to an embodiment, an electronic device is provided. The electronic device may include a first processor configured to process a softmax function, a second processor, and a memory. The second processor may be configured to control the first processor to process an artificial intelligence (AI) operation including the softmax function by executing instructions included in the memory. The first processor may be configured to implement an accelerator. The accelerator may comprise an input module, a distribution information processing module, and a look-up table (LUT) module. The input module may be configured to obtain input data comprising a plurality of quantized input values. The distribution information processing module may be configured to generate input data distribution information indicating a plurality of frequencies corresponding to the plurality of quantized input values included in the input data. The distribution information processing module may be configured to identify a largest value from among the plurality of quantized input values as a first maximum value, based on the input data distribution information. The distribution information processing module may be configured to determine an offset value based on a difference between the first maximum value and a second maximum value. The second maximum value may indicate a maximum quantization value that is representable by an input value of the input data. The LUT module may be configured to determine a plurality of index values by applying the offset value to each quantized input value of the plurality of quantized input values. The LUT module may be configured to output a value of the softmax function corresponding to each of the plurality of quantized input values based on the plurality of index values.

According to an embodiment of the disclosure, a recording medium storing at least one instruction for controlling a processor including an accelerator for processing a softmax function may be provided. The at least one instruction may control the processor to obtain, using an input module included in the accelerator, input data comprising a plurality of quantized input values. The at least one instruction may control the processor to generate, using a distribution information processing module included in the accelerator, input data distribution information indicating a plurality of frequencies corresponding to the plurality of quantized input values included in the input data. The at least one instruction may control the processor to identify, using the distribution information processing module, a largest value from among the plurality of quantized input values as a first maximum value, based on the input data distribution information. The at least one instruction may control the processor to determine, using the distribution information processing module, an offset value based on a difference between the first maximum value and a second maximum value, wherein the second maximum value indicates a maximum quantization value that is representable by an input value of the input data. The at least one instruction may control the processor to determine, using a look-up table (LUT) module included in the accelerator, a plurality of index values by applying the offset value to each quantized input value of the plurality of quantized input values. The at least one instruction may control the processor to output, using the LUT module, a value of the softmax function corresponding to each of the plurality of quantized input values based on the plurality of index values.

The processor, the operating method of the processor, and the electronic device including the processor, according to the disclosure, may reduce the size and complexity of the processor or shorten the time required for operations using the accelerator that processes the non-linear activation function.

An embodiment of the disclosure may also be implemented in the form of a recording medium including instructions executable by a computer, such as a program module executed by a computer. A computer-readable recording medium may be any available media that are accessible by the computer and may include any volatile and non-volatile media and any removable and non-removable media. The computer-readable recording medium may include a computer storage medium and a communication medium. The computer storage medium may include any volatile, non-volatile, removable, and non-removable media that are implemented in any method or technology for storage of information, such as computer-readable instructions, data structures, program modules, or other data. The communication medium may typically include computer-readable instructions, data structures, or other data of a modulated data signal, such as program modules.

The computer-readable storage medium according to an embodiment of the disclosure may be provided in the form of a non-transitory storage medium. The "non-transitory storage medium" is a tangible device and only means not including a signal (e.g., electromagnetic waves). This term does not distinguish between a case where data is semi-permanently stored in a storage medium and a case where data is temporarily stored in a storage medium. For example, the non-transitory storage medium may include a buffer in which data is temporarily stored.

The method according to an embodiment of the disclosure may be provided by being included in a computer program product. The computer program product may be traded between a seller and a buyer as commodities. The computer program product may be distributed in the form of a machine-readable storage medium (e.g., compact disc read-only memory (CD-ROM)), or may be distributed (e.g., downloaded or uploaded) online either via an application store or directly between two user devices (e.g., smartphones). In the case of the online distribution, at least a part of a computer program product (e.g., downloadable app) is stored at least temporarily on a machine-readable storage medium, such as a server of a manufacturer, a server of an application store, or a memory of a relay server, or may be temporarily generated.

The foregoing description of the disclosure is for illustrative purposes only, and those of ordinary skill in the art to which the disclosure pertains will understand that modifications into other specific forms may be made thereto without changing the technical spirit or essential features of the disclosure. Therefore, it should be understood that the embodiments described above are illustrative in all aspects and are not restrictive. For example, the components described as being singular may be implemented in a distributed manner. Similarly, the components described as being distributed may be implemented in a combined form.

The scope of the disclosure is defined by the appended claims rather than the above detailed description, and all changes or modifications derived from the meaning and scope of the claims and equivalent concepts thereof should be construed as falling within the scope of the disclosure.

**Claims**

1. A method performed by at least one processor configured to implement an accelerator for processing a softmax function, the method comprising:

    obtaining, using an input module included in the accelerator, input data comprising a plurality of quantized input values (310);
    generating, using a distribution information processing module included in the accelerator, input data distribution information indicating a plurality of frequencies corresponding to the plurality of quantized input values included in the input data (320);
    identifying, using the distribution information processing module, a largest value from among the plurality of quantized input values as a first maximum value, based on the input data distribution information (330);
    determining, using the distribution information processing module, an offset value based on a difference between the first maximum value and a second maximum value, wherein the second maximum value indicates a maximum quantization value that is representable by an input value of the input data (340);
    determining, using a look-up table (LUT) module included in the accelerator, a plurality of index values by applying the offset value to each quantized input value of the plurality of quantized input values (350); and
    outputting, using the LUT module, a value of the softmax function corresponding to each of the plurality of quantized input values based on the plurality of index values (360).

2. The method of claim 1, further comprising:

    generating, using the distribution information processing module, modified input data distribution information by shifting the input data distribution information by the offset value; and
    calculating, using an operation module included in the accelerator, a denominator value of the softmax function using the modified input data distribution information and exponential function information, wherein the exponential function information comprises an exponential function value corresponding to a quantized value, wherein a plurality of values stored in the LUT module are determined based on the denominator value of the softmax function.

3. The method of claim 2, wherein the denominator value of the softmax function is calculated by performing product and sum operations between the modified input data distribution information and the exponential function information by the operation module.

4. The method of claim 2 or 3, further comprising determining, using a parameter module included in the accelerator, at least one parameter for representing an approximate value corresponding to the denominator value of the softmax function.

5. The method of claim 4, wherein the at least one parameter comprises a first parameter and a second parameter, and wherein a value obtained by dividing the second maximum value by the denominator value of the softmax function is determined based on a value obtained by performing a right shift operation on the first parameter by the second parameter.

6. The method of claim 4 or 5, further comprising determining, using a post-processing module included in the accelerator, a value of the softmax function corresponding to a quantization value, based on the at least one parameter and the exponential function information,
wherein the plurality of values stored in the LUT module include the value of the softmax function.

7. The method of any one of claims 2 to 6, further comprising:

based on the first maximum value being less than or equal to a reference value, determining, using the LUT module, the plurality of index values by applying the offset value to each quantized input value of the plurality of quantized input values; and
based on the first maximum value being greater than the reference value, determining, using the LUT module, the plurality of index values to be equal to the plurality of quantized input values.

8. The method of any one of claims 1 to 7, further comprising:

sequentially storing the value of the softmax function in a memory corresponding to the accelerator using an output buffer included in an output module included in the accelerator; and
sequentially obtaining input data from the memory using an input buffer included in the input module.

9. The method of any one of claims 1 to 8, further comprising controlling, using a control module included in the processor, the accelerator to output output data comprising the value of the softmax function, based on the input data.

10. The method of any one of claims 1 to 9, wherein the input data and the output data comprise at least one from among vector-type data, matrix-type data, or tensor-type data comprising a plurality of quantized values,

wherein a size of the input data is equal to a size of the output data, and
wherein each quantized input value of the plurality of quantized input values represents at least one value between "0" and "$2^N$-1", where N is an integer, and
a value of the output data represents at least one value from "0" to "$2^N$".

11. A processor for processing a softmax function, the processor comprising:

an accelerator (110) comprising an input module (120), a distribution information processing module (130), and a look-up table (LUT) module (140),
wherein the input module (120) is configured to obtain input data including a plurality of quantized input values,
wherein the distribution information processing module (130) is configured to:

generate input data distribution information indicating a plurality of frequencies corresponding to the plurality of quantized input values included in the input data;
identify a largest value from among the plurality of quantized input values as a first maximum value, based on the input data distribution information; and

determine an offset value based on a difference between the first maximum value and a second maximum value, wherein the second maximum value indicates a maximum quantization value that is representable by an input value of the input data, and

wherein the LUT module (140) is configured to:

determine a plurality of index values by applying the offset value to each quantized input value of the plurality of quantized input values; and
output a value of the softmax function corresponding to each of the plurality of quantized input values based on the plurality of index values.

12. The processor of claim 11, wherein the distribution information processing module (130) is further configured to generate modified input data distribution information by shifting the input data distribution information by the offset value,

wherein the accelerator (110) further comprises an operation module configured to calculate a denominator value of the softmax function using the modified input data distribution information and exponential function information, wherein the exponential function information comprises an exponential function value corresponding to a quantized value, and
wherein a plurality of values stored in the LUT module are determined based on the denominator value of the softmax function.

13. The processor of claim 12, wherein the operation module is further configured to process product and sum operations between matrices or perform product and sum operations between vectors, and
wherein the denominator value of the softmax function is calculated by performing the product and sum operations between the modified input data distribution information and the exponential function information by the operation module.

14. The processor of claim 12 or 13, wherein the accelerator (110) further comprises a parameter module, and
wherein the parameter module is configured to determine at least one parameter for representing an approximate value corresponding to the denominator value of the softmax function.

15. An electronic device (1300) comprising:

a first processor (1310) configured to process a softmax function;
a second processor (1320); and
a memory (1330),
wherein the second processor (1320) is configured to control the first processor (1310) to process an artificial intelligence (AI) operation including the softmax function by executing instructions included in the memory (1330),
wherein the first processor (1310) is configured to implement an accelerator (110),
wherein the accelerator (110) comprises an input module (120), a distribution information processing module (130), and a look-up table (LUT) module (140),
wherein the input module is configured to obtain input data comprising a plurality of quantized input values,
wherein the distribution information processing module (130) is configured to:

generate input data distribution information indicating a plurality of frequencies corresponding to the plurality of quantized input values included in the input data;
identify a largest value from among the plurality of quantized input values as a first maximum value, based on the input data distribution information; and
determine an offset value based on a difference between the first maximum value and a second maximum value, wherein the second maximum value indicates a maximum quantization value that is representable by an input value of the input data, and

wherein the LUT module (140) is configured to:

determine a plurality of index values by applying the offset value to each quantized input value of the plurality of quantized input values; and
output a value of the softmax function corresponding to each of the plurality of quantized input values based on the plurality of index values .

# FIG. 1

PROCESSOR ⌐100

ACCELERATOR ⌐110

INPUT MODULE ⌐120

DISTRIBUTION INFORMATION PROCESSING MODULE ⌐130

LUT MODULE ⌐140

# FIG. 2

# FIG. 3

START

OBTAIN INPUT DATA INCLUDING PLURALITY OF QUANTIZED INPUT VALUES — 310

GENERATE INPUT DATA DISTRIBUTION INFORMATION INDICATING FREQUENCIES OF QUANTIZED INPUT VALUES INCLUDED IN INPUT DATA — 320

IDENTIFY LARGEST VALUE AMONG QUANTIZED INPUT VALUES AS FIRST MAXIMUM VALUE, BASED ON INPUT DATA DISTRIBUTION INFORMATION — 330

DETERMINE, AS OFFSET VALUE, DIFFERENCE BETWEEN FIRST MAXIMUM VALUE AND SECOND MAXIMUM VALUE INDICATING QUANTIZATION MAXIMUM REPRESENTABLE BY INPUT VALUE OF INPUT DATA — 340

DETERMINE INDEX VALUES BY APPLYING OFFSET VALUE TO EACH OF QUANTIZED INPUT VALUES — 350

OUTPUT VALUE CORRESPONDING TO EACH OF INDEX VALUES AS VALUE OF SOFTMAX FUNCTION FOR EACH OF QUANTIZED INPUT VALUES — 360

END

# FIG. 4A

# FIG. 4B

410b

Quantized EXP

$E_m$

$E_{m-1}$

1

$e_{min}$
$e_{min} + scale\_EXP$
$e_{min} + 2*scale\_EXP$
$e_{max} - 2*scale\_EXP$
$e_{max} - scale\_EXP$
$e_{max}$    EXP

$e_{min} = exp(x_{min})$
$e_{max} = exp(x_{max})$

420b

Quantized EXP

$E_m + ZP$

$E_m - 1 + ZP$

$1 + ZP$

$ZP$

$e_{min}$
$e_{min} + scale\_EXP$
$e_{min} + 2*scale\_EXP$
$e_{max} - 2*scale\_EXP$
$e_{max} - scale\_EXP$
$e_{max}$    EXP

$e_{min} = exp(x_{min})$
$e_{max} = exp(x_{max})$

EP 4 693 105 A1

# FIG. 4C

EXP

410c

$\exp(x_{max})$

$\exp(x_{min})$

$y = e^x$

$X_{min}$    $X_{max}$    input

QUANTIZATION ⟹

Quantized EXP

420c

$E_{Qmax}$

$E_{Qmax-1}$

$E_1$
$E_0$

1    $Q_{max}-1$    Quantized
         $Q_{max}$    input

EP 4 693 105 A1

FIG. 5

EP 4 693 105 A1

# FIG. 6

610

| i | Zi |
|---|---|
| 0 | 0 |
| 1 | 0 |
| 2 | 0 |
| ... | ... |
| 157 | 0 |
| 158 | 0 |
| 159 | 0 |
| 160 | 4 |
| 161 | 2 |
| ... | ... |
| 253 | 5 |
| 254 | 3 |
| 255 | 18 |

620

| input | output |
|---|---|
| 0 | $E_0$ |
| 1 | $E_1$ |
| . . . | . . . |
| 254 | $E_{244}$ |
| 255 | $E_{255}$ |

$$\sum E_i \approx \sum e^{i*scale\_X}/scale\_EXP$$

Where, $E_i \approx e^{i*scale\_X}/scale\_EXP$

FIG. 7

START

GENERATE MODIFIED INPUT DATA DISTRIBUTION
INFORMATION BY SHIFTING INPUT DATA
DISTRIBUTION INFORMATION BY OFFSET VALUE ——710

CALCULATE VALUE CORRESPONDING TO
DENOMINATOR OF SOFTMAX FUNCTION USING
MODIFIED INPUT DATA DISTRIBUTION INFORMATION ——720
AND EXPONENTIAL FUNCTION INFORMATION

END

# FIG. 8A

START

DETERMINE AT LEAST ONE PARAMETER FOR REPRESENTING APPROXIMATE VALUE TO VALUE CORRESPONDING TO DENOMINATOR OF SOFTMAX FUNCTION —810a

DETERMINE VALUE OF SOFTMAX FUNCTION CORRESPONDING TO QUANTIZATION VALUE, BASED ON AT LEAST ONE PARAMETER AND EXPONENTIAL FUNCTION INFORMATION —820a

END

FIG. 8B

```
                    ┌─────────┐
                    │  START  │
                    └────┬────┘
                         │                    ┌── 810b
            ┌────────────▼──────────────┐
            │ DIVIDEND := QMAX          │
            │ DIVISOR := SUM            │
            │ RSHAMT := 0               │
            └────────────┬──────────────┘
                         │                    ┌── 820b
                    ◇────▼──────────────◇     NO
              ◇  DIVISOR > DIVIDEND  ◇──────────────┐
                    ◇──────┬─────────◇              │
                       YES │                        │
                    ┌── 830b                        ▼          ┌── 840b
            ┌───────▼────────────────┐      ┌──────▼─────────────────┐
            │ DIVIDEND := DIVIEND << 1│      │ DIVISOR := DIVISOR << 1 │
            │ RSHAMT := RSHAMT + 1    │      │ RSHAMT := RSHAMT − 1    │
            └───────┬────────────────┘      └──────┬─────────────────┘
                    │        ┌── 832b               │        ┌── 842b
      YES  ◇────────▼────────◇              ◇───────▼────────◇  YES
      ◇ DIVISOR > DIVIDEND ◇              ◇ DIVISOR <= DIVIDEND ◇
           ◇────────┬───────◇              ◇───────┬────────◇
                 NO │                            NO │      ┌── 844b
                    │                      ┌────────▼────────────┐
                    │                      │ DIVISOR := DIVISOR >> 1│
                    │◄─────────────────────│ RSHAMT := RSHAMT + 1   │
                    │                      └─────────────────────┘
                    │      ┌── 850b
            ┌───────▼──────────────────┐
            │ DIVIDEND := DIVIDEND − DIVISOR│
            │ MULT := 1                 │
            │ MULT_BITS := 1            │
            └───────┬──────────────────┘
                    │         ┌── 860b
              ◇─────▼─────────◇   NO
              ◇ DIVISOR > DIVIDEND ◇──────────────┐
              ◇─────┬─────────◇                    │
                YES │  ┌── 870b                     │  ┌── 875b
            ┌───────▼──────────────────┐    ┌──────▼───────────────────┐
            │ DIVIDEND := DIVIDEND << 1 │    │ DIVIDEND := DIVIDEND − DIVISOR│
            │ MULT := MULT << 1         │    │ MULT := MULT + 1          │
            │ MULT_BITS := MULT_BITS + 1│    └──────┬───────────────────┘
            │ RSHAMT := RSHAMT + 1      │           │
            └───────┬──────────────────┘           │
                    │◄───────────────────────────────┘
                    │      ┌── 880b
      YES  ◇────────▼────────◇
      ◇ MULT_BITS < BITS_MAX ◇
           ◇────────┬────────◇
                 NO │   ┌── 890b
            ┌───────▼──────────────┐
            │ RETURN MULT, RSHAMT   │
            └───────┬──────────────┘
                    │
              ┌─────▼────┐
              │   END    │
              └──────────┘
```

# FIG. 9

START

DETERMINE VALUE OF SOFTMAX FUNCTION
CORRESPONDING TO QUANTIZATION VALUE,
BASED ON AT LEAST ONE PARAMETER AND
EXPONENTIAL FUNCTION INFORMATION — 910

STORE VALUE OF SOFTMAX FUNCTION IN
LUT MODULE — 920

END

# FIG. 10

INPUT DATA

120
INPUT MODULE

INPUT DATA

270
MEMORY

130
DISTRIBUTION
INFORMATION
PROCESSING
MODULE

EXPONENTIAL
FUNCTION
INFORMATION

INPUT DATA
DISTRIBUTION
INFORMATION

240
OPERATION MODULE

EXPONENTIAL
FUNCTION
INFORMATION

EXPONENTIAL
FUNCTION
INFORMATION

INPUT DATA

OFFSET VALUE

250
PARAMETER MODULE

PARAMETER
INFORMATION

260
POST-PROCESSING
MODULE

140
LUT MODULE

SOFTMAX FUNCTION INFORMATION

280
OUTPUT MODULE

OUTPUT DATA

# FIG. 11

START

LARGEST VALUE AMONG INPUT VALUES <= REFERENCE VALUE ? — 1110

NO

YES

DETERMINE OFFSET VALUE — 1120

GENERATE MODIFIED INPUT DATA DISTRIBUTION INFORMATION — 1130

1150

GENERATE INDEX VALUE BY USING INPUT VALUE

GENERATE INDEX VALUE BY USING INPUT VALUE AND OFFSET VALUE — 1140

END

## FIG. 12A

INPUT ⇨ CONVOLUTION + RELU ⇨ POLLING ⇨ . . . ⇨ FLATTEN ⇨ FULLY CONNECTED ⇨ SOFTMAX ⇨ OUTPUT

FEATURE LEARNING

CLASSIFICATION

# FIG. 12B

FIG. 13

ELECTRONIC DEVICE 1300

SECOND PROCESSOR 1320

MEMORY 1330

FIRST PROCESSOR 1310

FIG. 14

## INTERNATIONAL SEARCH REPORT

| International application No. |
|---|
| **PCT/KR2024/008440** |

**A. CLASSIFICATION OF SUBJECT MATTER**

**G06N 3/048**(2023.01)i; **G06N 3/0495**(2023.01)i; **G06N 3/063**(2006.01)i; **G06F 17/15**(2006.01)i

According to International Patent Classification (IPC) or to both national classification and IPC

**B. FIELDS SEARCHED**

Minimum documentation searched (classification system followed by classification symbols)

G06N 3/048(2023.01); G06F 7/556(2006.01); G06F 9/50(2006.01); G06N 3/02(2006.01); G06N 3/04(2006.01); G06N 3/063(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가속기(accelerator), 소프트맥스(softmax), 룩업테이블(lookup table), 양자(quantization), 최대값(maximum value), 오프셋(offset), 차이(difference), 시프팅(shifting)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0116182 A (SAMSUNG ELECTRONICS CO., LTD.) 27 September 2021 (2021-09-27) See paragraphs [0052], [0093], [0098] and [0103]; and figures 1-3 and 12. | 1,8-11,15 |
| A | | 2-7,12-14 |
| Y | JP 7180680 B2 (SOCIONEXT INC.) 30 November 2022 (2022-11-30) See paragraph [0059]; and claim 1. | 1,8-11,15 |
| A | KR 10-2021-0131574 A (ELECTRONICS AND TELECOMMUNICATIONS RESEARCH INSTITUTE) 03 November 2021 (2021-11-03) See paragraphs [0027]-[0032]; and figures 1-2. | 1-15 |
| A | US 2022-0391172 A1 (IMAGINATION TECHNOLOGIES LIMITED) 08 December 2022 (2022-12-08) See claims 1-6. | 1-15 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **30 September 2024** | **30 September 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/008440** |

### C.    DOCUMENTS CONSIDERED TO BE RELEVANT

| Category* | Citation of document, with indication, where appropriate, of the relevant passages | Relevant to claim No. |
| --- | --- | --- |
| A | DONG, Xiao et al. Hardware Implementation of Softmax Function Based on Piecewise LUT. 2019 IEEE International Workshop on Future Computing (IWOFC). 15 December 2019.<br>See sections 1-3. | 1-15 |

Form PCT/ISA/210 (second sheet) (July 2022)

**INTERNATIONAL SEARCH REPORT**
Information on patent family members

International application No.

**PCT/KR2024/008440**

| Patent document cited in search report | | | Publication date (day/month/year) | Patent family member(s) | | | Publication date (day/month/year) |
|---|---|---|---|---|---|---|---|
| KR | 10-2021-0116182 | A | 27 September 2021 | CN | 113407747 | A | 17 September 2021 |
| | | | | EP | 3882823 | A1 | 22 September 2021 |
| | | | | US | 2021-0294784 | A1 | 23 September 2021 |
| JP | 7180680 | B2 | 30 November 2022 | CN | 112740233 | A | 30 April 2021 |
| | | | | JP | 2021-065874 | A1 | 30 August 2021 |
| | | | | US | 2021-0209470 | A1 | 08 July 2021 |
| | | | | WO | 2020-065874 | A1 | 02 April 2020 |
| KR | 10-2021-0131574 | A | 03 November 2021 | KR | 10-2592708 | B1 | 24 October 2023 |
| | | | | US | 2021-0334635 | A1 | 28 October 2021 |
| US | 2022-0391172 | A1 | 08 December 2022 | CN | 114970807 | A | 30 August 2022 |
| | | | | EP | 4050522 | A1 | 31 August 2022 |
| | | | | GB | 2604142 | A | 31 August 2022 |
| | | | | GB | 2604142 | B | 22 February 2023 |

Form PCT/ISA/210 (patent family annex) (July 2022)